# EUROPEAN PATENT APPLICATION

(11) **EP 4 369 476 A2**
(43) Date of publication of application: **15.05.2024**
(21) Application number: 24161922.0
(22) Date of filing: 30.11.2022
(51) Int. Cl.: H01M 10/658

(54) **MATERIALS, SYSTEMS, AND METHODS FOR ENCAPSULATING THERMAL BARRIER MATERIALS**

(30) Priority: 01.12.2021 US 202163284917 P
(62) Divisional of application: 22821646.1
(71) Applicant: Aspen Aerogels, Inc., Northborough MA 01532 (US)
(72) Inventor: WILLIAMS, John, Groton, 01450 (US); NAM, Younggyu, Medford, 02155 (US); CAHILL, Brian, Inverin, H91 CX7N (IE); HENNEMUTH, Robert, Franklin, 02038 (US)
(74) Representative: Forresters IP LLP

(57) **Abstract**

The present disclosure relates to an insulation barrier for use in an electrical energy storage system, the insulation barrier comprising: at least one insulation layer; a support member surrounding at least a portion of the insulation layer; an encapsulation layer at least partially surrounding the insulation layer, wherein the encapsulation layer comprises a laminate film comprising an outer polymer layer, a rigid layer, and an inner polymer layer, wherein the inner polymer layer is in contact with the insulation layer and wherein the rigid layer is disposed between the outer polymer layer and the inner polymer layer; and wherein the encapsulation layer further comprises an extension portion extending beyond the support member in contact with an interior surface of a battery cell enclosure to form a seal with an interior surface of the battery cell enclosure.

## Description

### Cross-Reference to Related Applications

This application claims the benefit of and priority to U.S. Provisional Patent Application No. 63/284,917 filed on December 1, 2021 titled "Materials, Systems, and Methods for Encapsulating Materials" the contents of which are incorporated herein by reference in their entirety.

### Field of the Technology

The present disclosure relates generally to materials, systems, and methods for encapsulating materials. In particular, the present disclosure relates to materials, systems and methods for encapsulation of thermal barriers that are used between battery cells or battery modules in energy storage systems. The present disclosure further relates to the encapsulation of aerogel thermal barriers. The present disclosure further relates to a battery module or battery pack with one or more battery cells that includes the encapsulated thermal barrier materials, as well as systems including those battery modules or battery packs.

### Background

Rechargeable batteries such as lithium-ion batteries have found wide application in the power-driven and energy storage systems. Lithium-ion batteries (LIBs) are widely used in powering portable electronic devices such as cell phones, tablets, laptops, power tools and other high-current devices such as electric vehicles because of their high working voltage, low memory effects, and high energy density compared to traditional batteries. However, safety is a concern as LIBs are susceptible to catastrophic failure under "abuse conditions" such as when a rechargeable battery is overcharged (being charged beyond the designed voltage), over-discharged, or operated at or exposed to high temperature and high pressure. As a consequence, narrow operational temperature ranges and charge/discharge rates are limitations on the use of LIB s, as LIBs may fail through a rapid self-heating or thermal runaway event when subjected to conditions outside of their design window.

Thermal runaway may occur when the internal reaction rate increases to the point that more heat is being generated than can be withdrawn, leading to a further increase in both reaction rate and heat generation. During thermal runaway, high temperatures trigger a chain of exothermic reactions in a battery, causing the battery's temperature to increase rapidly. In many cases, when thermal runaway occurs in one battery cell, the generated heat quickly heats up the cells in close proximity to the cell experiencing thermal runaway. Each cell that is added to a thermal runaway reaction contains additional energy to continue the reactions, causing thermal runaway propagation within the battery pack, eventually leading to a catastrophe with fire or explosion. Prompt heat dissipation and effective block of heat transfer paths can be effective countermeasures to reduce the hazard caused by thermal runaway propagation.

Based on the understanding of the mechanisms leading to battery thermal runaway, many approaches are being studied, with the aim of reducing safety hazards through the rational design of battery components. To prevent such cascading thermal runaway events from occurring, LIBs arc typically designed to either keep the energy stored sufficiently low, or employ enough insulation material between cells within the battery module or pack to insulate them from thermal events that may occur in an adjacent cell, or a combination thereof. The former severely limits the amount of energy that could potentially be stored in such a device. The latter limits how close cells can be placed and thereby limits the effective energy density.

There are currently a number of different methodologies employed to maximize energy density while guarding against cascading thermal runaway. One approach is to incorporate a sufficient amount of insulation between cells or clusters of cells. This approach is generally thought to be desired from a safety vantage; however, in this approach the ability of the insulating material to contain the heat, combined with the volume of insulation required dictate the upper limits of the energy density that can be achieved.

Another approach is through the use of phase change materials. These materials undergo an endothermic phase change upon reaching a certain elevated temperature. The endothermic phase change absorbs a portion of the heat being generated and thereby cools the localized region. Typically, for electrical storage devices these phase change materials rely on hydrocarbon materials such as waxes and fatty acids for example. These systems are effective at cooling, but are themselves combustible and therefore are not beneficial in preventing thermal runaway once ignition within the storage device does occur.

Incorporation of intumescent materials is another strategy for preventing cascading thermal runaway. These materials expand above a specified temperature producing a char that is designed to be lightweight and provide thermal insulation when needed. These materials can be effective in providing insulating benefits, but the expansion of the material must be accounted for in the design of the storage device.

Aerogel materials have also been used as thermal barrier materials. Aerogel thermal barriers offer numerous advantages over other thermal barrier materials. Some of these benefits include favorable resistance to heat propagation and fire propagation while minimizing thickness and weight of materials used. Aerogel thermal barriers also have favorable properties for compressibility, compressional resilience, and compliance. Some aerogel based thermal barriers, due to their light weight and low stiffness, can be difficult to install between battery cells, particularly in a mass production setting. Furthermore, aerogel thermal barriers tend to produce particulate matter (dust) that can be detrimental to the electrical storage systems, creating manufacturing problems.

With many different materials available, each having many different properties, both favorable and otherwise, it would be advantageous to encapsulate a thermal barrier material to provide additional protection to both the battery cells and the thermal barrier, while also simplifying the manufacturing process.

### Summary

It is an object of the present disclosure to obviate or mitigate at least one disadvantage of previous methods and materials mentioned above. The support members and encapsulation material provided herein are designed to improve encapsulation and handling of thermal barriers used in battery modules or battery packs.

In an aspect of the present disclosure, an insulation barrier for use in an electrical energy storage system comprises: at least one insulation layer, a support member surrounding at least a portion of the insulation layer; and an encapsulation layer at least partially surrounding the insulation layer. The encapsulation layer contacts at least a portion of the support member. The encapsulation layer comprises a laminate film comprising an outer polymer layer, a rigid layer, and an inner polymer layer, wherein the inner polymer layer is in contact with the insulation layer and wherein the rigid layer is disposed between the outer polymer layer and the inner polymer layer.

A support member can be a unitary support member composed of a single piece of material or may be composed of two or more support pieces that are joined together to form a support member. In an embodiment, a support member comprises two support members that are positioned on opposing sides of the insulation layer. In another embodiment, the support member surrounds the perimeter of the insulation layer. In another embodiment, the support member is substantially U-shaped.

To provide support for the insulation layer, the support member may be formed from a material having a flexural modulus greater than the flexural modulus of the insulation layer. In an aspect of the present disclosure, a support member should have a flexural modulus greater than 100 MPa. In an embodiment, the support member is composed of a material that is different from the material used for the insulation layer. In a preferred embodiment, the support member is composed of a polymeric material. In some embodiments, the support member may comprise an intumescent material. In an embodiment, the support member has a thickness that is less than the thickness of the insulation layer.

The insulation layer can be composed of any material that is useful for reducing heat transmission between battery cells. Generally, an insulation layer will have a thermal conductivity through a thickness dimension of said insulation layer of less than about 50 mW/m-K at 25 °C and less than about 60 mW/m-K at 600 °C. In a preferred embodiment, the insulation layer comprises an aerogel.

The encapsulation layer can be attached to the support member. Alternatively, the encapsulation layer surrounds the insulation layer and the support member. The encapsulation layer is then sealed to itself to form an enclosure at least partially surrounding the insulation layer.

In an aspect of the present disclosure, the insulation barrier comprises one or more adhesive pads coupled to the encapsulation layer. The adhesive pads can provide a cushion between adjacent battery cells. Also, the adhesive pads can be adhered to adjacent battery cells, inhibiting misalignment of the insulation barrier with the battery cells during manufacturing and use.

The outer polymer layer comprises a polymer that is resistant to dielectric heat transfer fluids in the electrical energy storage system. For example, the outer polymer layer comprises a polymer that is resistant to a heat transfer fluid selected from the group consisting of hydrocarbon fluids, ester fluids, silicone fluids, fluoroether fluids, and combinations thereof. In one aspect of the present disclosure, the outer polymer layer is made from a polymer selected from the group consisting of polyoxymethylene, acrylonitrile butadiene styrene, polyamide-imide, polyamide, polycarbonate, polyester, polyetherimide, polystyrene, polysulfone, polyimide, and terephthalate.

The inner polymer layer comprises a polymer that can be heat welded to itself. For example, the inner polymer layer comprises a polyolefin polymer. In some aspects, the inner polymer is composed of a polymer that is different from the polymer in the outer polymer layer.

In a specific aspect of the disclosure, the outer polymer layer is composed of polyethylene terephthalate ("PET") or a nylon polymer, and the inner polymer layer is composed of polypropylene ("PP") or polyethylene ("PE").

The rigid layer comprises, in some aspects, a metal foil. Specific metal foils that can be used as the rigid layer include, but are not limited to, aluminum, copper, steel, and titanium.

In some aspects, the rigid layer comprises a polymer. Specific polymers that can be used as the rigid layer include, but are not limited to, polybenzimidazole fiber (PBI fiber), nylon, melamine, modacrylic, and aromatic polyamide (aramid).

Other materials that can be used for the rigid layer include, but are not limited to, carbon fibers, graphite, silicon carbide, and mica.

In an aspect of the disclosure, the encapsulation layer further comprises an adhesive disposed between the outer polymer layer and the rigid layer and/or the inner polymer layer and the rigid layer.

In an aspect of the disclosure, the outer polymer layer has a thickness of about 10 µm to about 50 µm. In an aspect of the disclosure, the rigid layer has a thickness of about 50 µm to about 150 µm. In an aspect of the disclosure, the inner polymer layer has a thickness of about 10 µm to about 50 µm. In an aspect of the disclosure, the encapsulation layer has a total thickness of between about 70 µm to about 200 µm.

In an aspect of the disclosure, the encapsulation layer is attached to the support member. The encapsulation layer can be coupled to the support member using one or more adhesive pads.

In another aspect of the present disclosure, a method of encapsulating an insulation layer comprises: surrounding at least a portion of the insulation layer with a support member; and forming an encapsulation layer over at least a portion of the insulation layer and the support member. The encapsulation layer contacts at least a portion of the support member. In a specific embodiment, at least a portion of the encapsulation layer is attached to at least a portion of the support member. In an embodiment, the encapsulation layer is attached to at least a portion of the support member by heating the encapsulation layer while the encapsulation layer is in contact with the support member. During this process, the encapsulation layer is held in contact with the support member by a heated element. Alternatively, the encapsulation layer can be attached to the support member by an adhesive.

In another embodiment, forming the encapsulation layer comprises: covering at least a portion of the insulation layer and the support member with the encapsulation layer; and connecting two or more separate portions of the encapsulation layer together to form an enclosure surrounding at least a portion of the insulation layer and the support member. During this process, the two or more separate portions of the encapsulation layer are attached together by heating the two or more separate portions while the two or more separate portions are in contact. In either embodiment of forming the encapsulation layer over the insulation layer, the encapsulation layer may partially, or may completely, surround the insulation layer and the support members.

In an aspect of the present disclosure, at least one rigid layer is disposed between the two or more separate portions of the encapsulation layer. The at least one rigid layer, in an embodiment, may be embedded between the two or more separate portions of the encapsulation layer. In an embodiment, the process includes forming a bend in the at least one rigid layer to provide an extension portion than extends from the insulation layer. In an embodiment, the two or more separate portions are held together by a pair of elements on opposing sides of the two or more separate portions, wherein at least one of the elements is heated.

In another aspect of the present disclosure, a battery module comprises a plurality of battery cells and one or more insulation barriers, as described herein, disposed between adjacent battery cells.

In another aspect, provided herein is a device or vehicle including the battery module or pack according to any one of the above aspects. In some embodiments, said device is a laptop computer, PDA, mobile phone, tag scanner, audio device, video device, display panel, video camera, digital camera, desktop computers military portable computers military phones laser range finders digital communication device, intelligence gathering sensor, electronically integrated apparel, night vision equipment, power tool, calculator, radio, remote controlled appliance, GPS device, handheld and portable television, car starters, flashlights, acoustic devices, portable heating device, portable vacuum cleaner or a portable medical tool. In some embodiments, the vehicle is an electric vehicle.

In one or more embodiments, the insulation barrier according to any of the above aspects has an average thickness in a range of between about 2 mm to about 10 mm in an uncompressed state.

The insulation barrier described herein can provide one or more advantages over existing thermal runaway mitigation strategies. The insulation barrier described herein can minimize or eliminate cell thermal runaway propagation without significantly impacting the energy density of the battery module or pack and assembly cost. The insulation barrier of the present disclosure can provide favorable properties for compressibility, compressional resilience, and compliance to accommodate swelling of the cells that continues during the life of the cell while possessing favorable thermal properties under normal operation conditions as well as under thermal runaway conditions. The insulation barriers described herein are durable and easy to handle, have favorable resistance to heat propagation and fire propagation while minimizing thickness and weight of materials used, and also have favorable properties for compressibility, compressional resilience, and compliance.

### Brief Description of the Drawings

Having thus described the disclosure in general terms, reference will now be made to the accompanying drawings, which are not necessarily drawn to scale, and wherein:
FIG. 1 is an exploded view of an exemplary insulation barrier of the present disclosure.
FIG. 2 is a side view of an insulation layer fully surrounded by a support member.
FIG. 3 is a side view of an insulation layer surrounded by a U-shaped support member.
FIG. 4 is a side view of an insulation layer coupled to two separate support members.
FIG. 5A schematically illustrates a battery cell and barrier prior to assembly.
FIG. 5B schematically illustrates a battery cell and barrier after assembly.
FIG. 5C schematically illustrates a battery cell and barrier at the end of the battery cell life.
FIG. 6 schematically illustrates a manufacturing process used to make a laminate encapsulation layer.
FIG. 7 schematically illustrates an encapsulation layer having an extension portion that forms a seal with an interior surface of a battery cell enclosure.
FIG. 8 schematically illustrates an insulation barrier having adhesive pads.
FIG. 9A depicts a top view of an insulation barrier placed between two battery cells.
FIG. 9B depicts a detailed view of FIG. 9A having a support member.
FIG. 9C depicts a detailed view of FIG. 9A without a support member.
FIG. 10 depicts a top view of a battery module having registration guides for alignment of insulation barriers with battery cells.
FIG. 11 depicts an alternate embodiment of an insulation barrier composed of an intumescent material and a thermally conductive encapsulation layer.
FIG. 12 depicts a close-up view of the support member coupled to the insulation layer.
FIG. 13 depicts a schematic view of an intumescent support member before and after a high temperature event.
FIG. 14 depicts an embodiment of an insulation layer that includes a U-shaped support member that substantially surrounds the insulation layer.
FIG. 15 depicts an embodiment of an insulation barrier having an insulation layer at least partially surrounded by a support member.
FIG. 16 depicts an alternate embodiment of a support member having particle capture members incorporated into the openings formed in the corners of the support members.
FIG. 17 depicts a side view of an insulation barrier having an intumescent support member coupled to an insulation layer and an encapsulation layer.
FIG. 18 depicts a side view of an insulation barrier having an intumescent support member wrapped around the edge of the encapsulation layer.
FIG. 19 depicts a side view of an insulation barrier having an intumescent support member wrapped around the edge of a U-shaped encapsulation layer.
FIG. 20 depicts a side view of an insulation barrier having an intumescent support member having a U-shaped encapsulation layer.
FIG. 21 depicts a schematic view of a battery module/pack having insulation layers having sealing tabs.
FIG. 22 depicts a schematic view of a battery module/pack having insulation layers having paired sealing tabs.
FIG. 23 depicts a schematic view of a battery module/pack having sealing tabs placed over the intumescent material.
FIG. 24 depicts a schematic view of a battery module having sealing tabs coupled to the enclosure.
FIG. 25 depicts a schematic diagram of an insulation barrier having a laminated insulation layer.
FIG. 26A depicts a schematic diagram of an insulation layer.
FIG. 26B depicts an insulation layer that is completely surrounded by a support member.
FIG. 26C depicts an insulation layer that is partially surrounded by a support member.
FIG. 26D depicts an insulation layer the is surrounded by a support member having a roughened surface on the support member.
FIG. 27A depicts an insulation barrier having an insulation layer disposed in a support member.
FIG. 27B depicts an insulation barrier having a polymer film encapsulation layer.
FIG. 27C depicts an insulation barrier with an insulation layer that is encapsulated by a rigid layer.
FIG. 28A depicts an insulation barrier with an insulation layer that is encapsulated by a rigid layer and a polymer film.
FIG. 28B depicts an insulation barrier with an insulation layer that is encapsulated by a laminate film.
FIG. 29A depicts an exploded view of a battery module having a plurality of battery cells and a plurality of encapsulated insulation barriers positioned between the battery cells.
FIG. 29B depicts a battery module that includes a casing that holds battery cells separated by insulation barriers.
FIG. 30 depicts an exploded view of a battery module that includes a casing that holds battery cells separated by insulation barriers and rigid layers.
FIG. 31 depicts an alternate battery module that includes a casing that holds battery cells separated by insulation barriers.

### Detailed Description

In the following detailed description of the preferred embodiments, reference is made to the accompanying drawings, which form a part thereof, and within which are shown by way of illustration specific embodiments by which the disclosure may be practiced. It is to be understood that other embodiments may be utilized and structural changes may be made without departing from the scope of the disclosure.

The present disclosure is directed to an insulation barrier and systems including insulation barriers to manage thermal runaway issues in energy storage systems. Exemplary embodiments include an insulation barrier comprising at least one insulation layer, a support member surrounding at least a portion of the insulation layer, and an encapsulation layer at least partially surrounding the insulation layer. The encapsulation layer, in an embodiment, contacts at least a portion of each of the support member.

An insulation layer may include any kind of insulation layer commonly used to separate battery cells or battery modules. Exemplary insulation layers include, but are not limited to, polymer based thermal barriers (e.g., polypropylene, polyester, polyimide, and aromatic polyamide (aramid)), phase change materials, intumescent materials, aerogel materials, mineral based barrier (e.g., mica), and inorganic thermal barriers (e.g., fiberglass containing barriers).

In a preferred embodiment, the insulation layer comprises an aerogel material. A description of an aerogel insulation layer is described in U.S. Patent Application Publication No. 2021/0167438 and U.S. Provisional Patent Application No. 63/218,205, both of which are incorporated herein by reference.

The insulation layer of the present disclosure has a thermal conductivity through a thickness dimension of said insulation layer about 50 mW/mK or less, about 40 mW/mK or less, about 30 mW/mK or less, about 25 mW/mK or less, about 20 mW/mK or less, about 18 mW/mK or less, about 16 mW/mK or less, about 14 mW/mK or less, about 12 mW/mK or less, about 10 mW/mK or less, about 5 mW/mK or less, or in a range between any two of these values at 25 °C under a load of up to about 5 MPa.

Insulation layers can have a number of different physical properties that make it difficult to incorporate the insulation layers into a battery module or battery pack. For example, some insulation layers have very low flexural modulus (e.g., less than 10 MPa), making the materials difficult to handle and position between battery cells. Additionally, a low flexural modulus material can be difficult to manipulate, particularly if using an automated encapsulation process. Other insulation layers may have a higher flexural modulus, but may be brittle, making the insulation layer easy to break during manufacture of the battery module or battery pack.

The present disclosure helps mitigate these problems by using a support member that surrounds at least a portion of the insulation layer. The support member is positioned at the periphery of the insulation layer and provides a support for the insulation layer. Additionally, the encapsulation layer can be attached to the support member. With the support member positioned along the periphery of the insulation layer, attachment of the encapsulation layer to the support member at least partially encloses the insulation layer in the encapsulation layer.

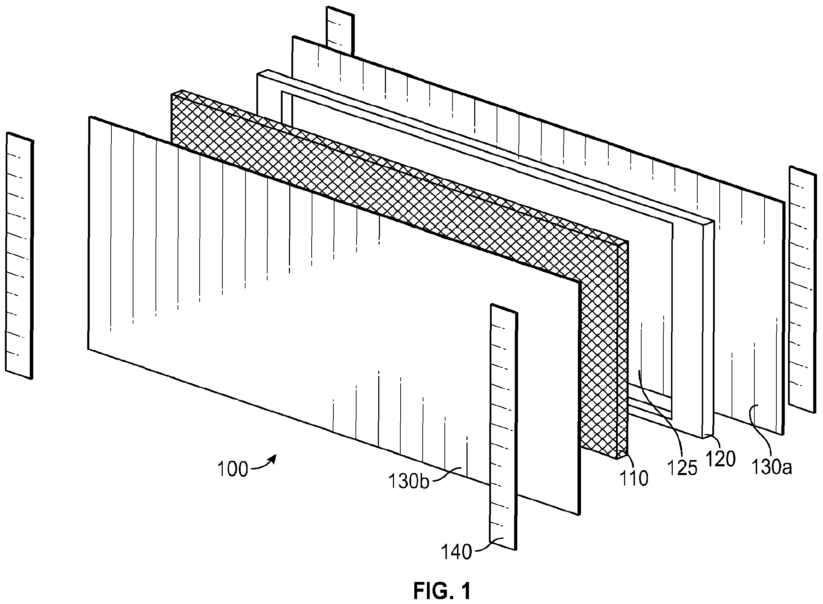

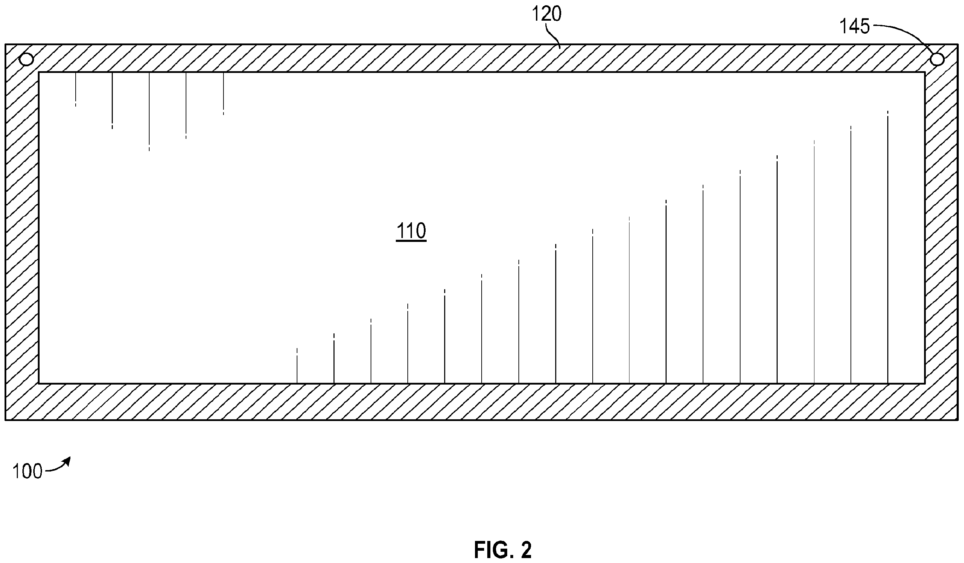

An embodiment of an insulation barrier is depicted in **FIG. 1****.** Insulation barrier **100** includes an insulation layer **110.** Insulation layer **110** is surrounded by support member **120**. In an embodiment, support member **120** includes an opening **125** which is complementary in shape with the periphery of the insulation layer. Opening **125** may be sized to be about the same size as the insulation layer. During assembly, insulation layer **110** may be placed in opening **125** and held in place by support member **120.** For example, support member **120** may have an opening that is the same dimensions (length x width) or slightly smaller than the corresponding dimensions of the insulation layer. In such an embodiment, insulation layer **110** fits within opening **125** of support member **120** and is held in place by a friction fit. Alternatively, or in addition, the insulation layer may be bonded to the support member by use of an adhesive (e.g., glue or tape) that fastens the insulation layer to the support member. A side view of an encapsulated insulation layer **110** disposed within the opening of support member **120** is depicted in **FIG. 2****.**

Encapsulation layer **130** is attached to support member **120,** covering at least one side of insulation layer **110** with an encapsulation material. Preferably, encapsulation layer **130** covers both sides of insulation layer **110.** In an aspect of the present disclosure, encapsulation layer **130** is composed of two sheets of the encapsulation material, **130a** and **130b.** In an embodiment, the encapsulation layer(s) are attached to the support member to enclose at least a portion of the insulation layer. In an embodiment, when two sheets are used, the encapsulation sheets are attached to the support members to enclose the insulation material.

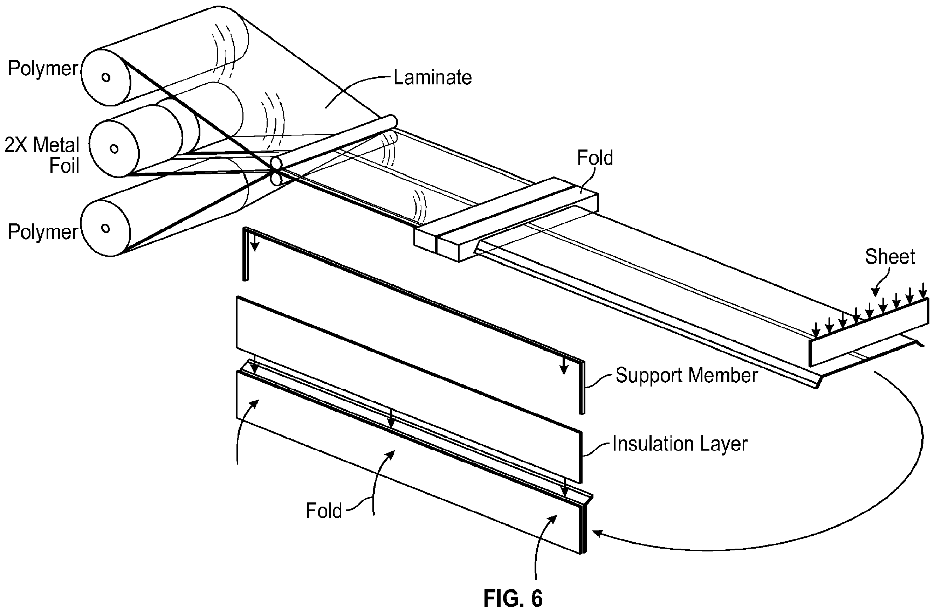

In an alternate embodiment, an encapsulation layer may be formed as a bag (See **FIG. 6**). The support member, containing the insulation layer, can be placed inside the bag-shaped encapsulation layer. The encapsulation layer is then attached to the support member to enclose at least a portion of the insulation layer.

In an embodiment, the support member is formed as a unitary piece of material. For example, the support member may be formed from a single piece material with an opening formed in the middle of the material. The opening in the single piece of material may be formed by cutting an opening (e.g., using a laser cutter) in the material. Alternatively, the support member may be formed by an injection molding process, in which the shape of the support member can be controlled through the selection of the mold used to form the support member. In another embodiment, the support member may be made of two or more support pieces that are joined together to form the support member. For example, a rectangular support member can be formed from four separate support pieces, joined together to form a support member. The support members may be glued or welded together.

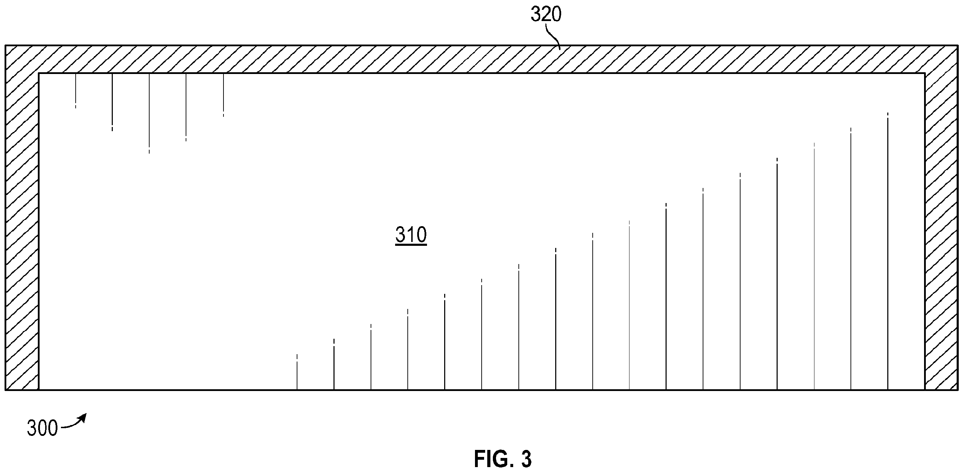

While the embodiment of **FIGS. 1** and **2** depict the support member as a rectangular frame, it should be understood that the support member does no need to entirely enclose the insulation layer to be effective. For example, **FIG. 3** depicts an insulation barrier **300** having a support member **320** that is substantially U-shaped. The support member, therefore, only covers three sides of insulation layer **310.** The U-shaped support member provides a surface that allows partial or complete encapsulation of the insulation layer. The insulation layer may be disposed in the U-shaped opening by a friction fit or by use of an adhesive (glue or tape).

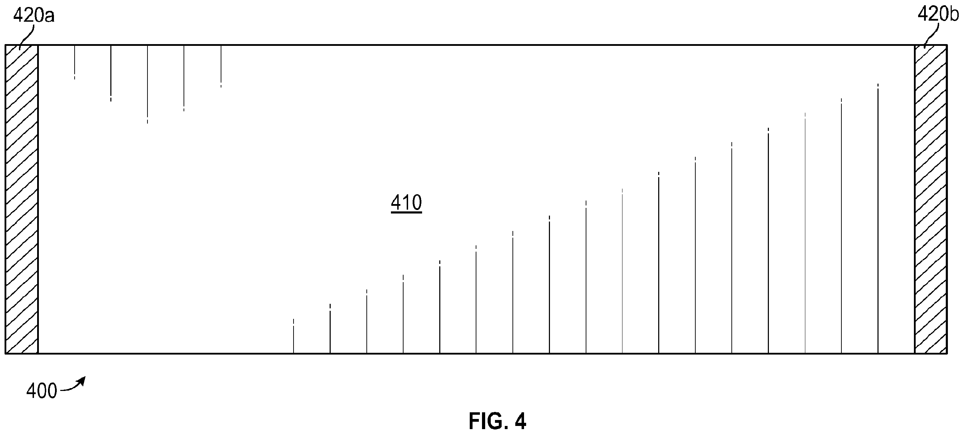

In another embodiment, depicted in **FIG. 4****,** an insulation barrier **400** includes two separate support members, **420a** and **420b,** disposed on the edges of the insulation layer **410**. The two separate support members may be disposed on opposing edges of the insulation layer (as shown in **FIG. 4**) or in an L-shape along two adjacent sides of the insulation layer (not shown). The support members can be attached to the insulation layer through the use of an adhesive (glue or tape).

In an embodiment, the support member is formed from a material that is different from the material used to form the insulation layer. In a preferred embodiment, the support member has a flexural modulus that is greater than the flexural modulus of the insulation layer. For example, many different types of insulation layers are formed from a material that has a low flexural modulus. As used herein, the phrase "low flexural modulus" refers to a flexural modulus that is less than about 10 MPa. In a preferred embodiment, the flexural modulus of the support member is greater than 100 MPa.

A variety of materials may be used to form the support members, including polymers and metals. Polymers are preferred as the material for forming the support members, due to their ease in manufacturing, light weight, dielectric properties, and thermal and flame resistance. In an embodiment, the polymer chosen to form the support member has a flexural modulus of greater than about 100 MPa. Exemplary polymers that may be used as a material for forming a supporting member include, but are not limited to, polypropylene, polyesters, polycarbonate, polyimides, and aromatic polyamides. Additives may be present in the polymer used to form the supporting member to improve the flexural modulus, reduce the thermal conductivity, decrease flammability, or to modify any combination of these features.

In an embodiment, a support member has a thermal conductivity through a thickness dimension of said insulation layer about 50 mW/mK or less, about 40 mW/mK or less, about 30 mW/mK or less, about 25 mW/mK or less, about 20 mW/mK or less, about 18 mW/mK or less, about 16 mW/mK or less, about 14 mW/mK or less, about 12 mW/mK or less, about 10 mW/mK or less, about 5 mW/mK or less, or in a range between any two of these values at 25 °C.

In certain embodiments, a support member of the present disclosure may have a heat of combustion ("HOC") of about 750 cal/g or less, about 717 cal/g or less, about 700 cal/g or less, about 650 cal/g or less, about 600 cal/g or less, about 575 cal/g or less, about 550 cal/g or less, about 500 cal/g or less, about 450 cal/g or less, about 400 cal/g or less, about 350 cal/g or less, about 300 cal/g or less, about 250 cal/g or less, about 200 cal/g or less, about 150 cal/g or less, about 100 cal/g or less, about 50 cal/g or less, about 25 cal/g or less, about 10 cal/g or less, or in a range between any two of these values. Within the context of the present disclosure, a first material that has a heat of combustion that is lower than the HOC of a second material would be considered an improvement of the first material over the second material. In certain embodiments of the present disclosure, the HOC of an insulation layer is improved by incorporating a fire-class additive into the support member.

In certain embodiments, a support member of the present disclosure has an onset of thermal decomposition of about 300°C or more, about 320°C or more, about 340°C or more, about 360°C or more, about 380°C or more, about 400°C or more, about 420°C or more, about 440°C or more, about 460°C or more, about 480°C or more, about 500°C or more, about 515°C or more, about 550°C or more, about 600°C or more, or in a range between any two of these values. Within the context of the present disclosure, for example, a first composition having an onset of thermal decomposition that is higher than an onset of thermal decomposition of a second composition, would be considered an improvement of the first composition over the second composition. It is contemplated herein that onset of thermal decomposition of a composition or material is increased when adding one or more fire-class additives, as compared to a composition that does not include any fire-class additives.

In an embodiment, a support member may be formed from an intumescent material. An intumescent material is a material that swells when exposed to heat. In the context of battery modules, as a battery cell begins to fail, the temperature of the battery cell rapidly increases, which can increase the temperature inside the module. This increase in temperature can cause the heat-induced swelling of the intumescent material used to form the support member, creating a seal between adjacent battery cells. This swelling of the support members can provide increased resistant to high pressure gasses and particulate matter released if the battery cell burst open. Exemplary intumescent materials are disclosed in U.S. Pat. No. 3,513,114 to Hahn et al.; U.S. Pat. No. 5,487,946 to McGinniss et al.; U.S. Pat. No. 5,591,791 to Deogon; U.S. Pat. No. 5,723,515 to Gottfried; U.S. Patent No. 6,790,893 to Nguyen et al.; PCT Patent Application Publication No. WO 94/17142 to Buckingham et al.; PCT Patent Application Publication No. WO 98/04639 to Janci; and PCT Patent Application Publication WO 2020/077334 to Fleetwood et al., all of which are incorporated fully herein by reference.

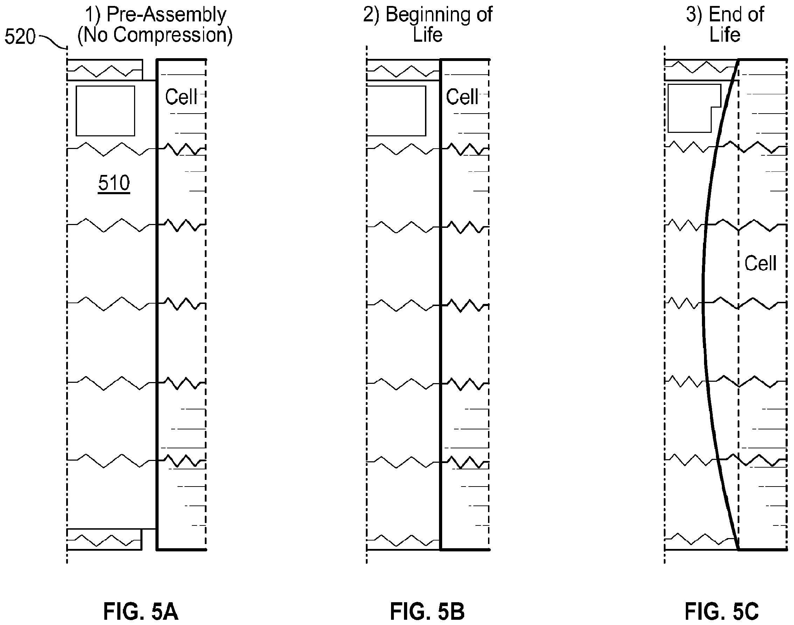

In an embodiment, a support member has a thickness that is less than the thickness of the insulation layer. FIG. 5A shows a side view of an insulation layer **510** coupled to a support member **520.** As seen, at the pre-assembly stage (no compression on the insulation layer), support member **520** has a thickness that is less than the thickness of insulation layer **510.** As shown, the insulation layer, therefore, protrudes from the support member. During installation, at the beginning of the battery cell life cycle, the insulation layer comes into contact with the battery cell and is slightly compressed, as shown in **FIG. 5B****.** It was found that, in some instances, if the support member has a thickness that is greater than, or equal to, the thickness of the insulation layer, the support member will contact the battery cell, preventing the insulation layer from contacting the battery cell. The use of a support member that is thinner than the insulation layer can overcome this issue.

As shown in **FIG. 5C****,** at the end of the battery cell life, the battery cell will begin to swell. The configuration of the support member positioned around the periphery of the insulation layer allows the battery cell to swell and compress against the insulation layer, which in the present disclosure, is more compressible than the support member. Allowing the battery cell to swell as the battery cell ages will help prevent catastrophic failure of the battery cell enclosure.

The encapsulation layer is a single layer or multiple layers of material. The encapsulation layer can be in the form of a film, an envelope, or a bag. The encapsulation layer can be made of any material that is suitable to enclose the insulation layer. Materials used to form the encapsulation layer can be selected from a polymer, an elastomer or combination thereof. Examples of suitable polymers such as polyethylene terephthalate (PET), polyethylene (PE), polyimide (PI), rubber, polypropylene, polyamide, and nylon, have very low thermal conductivity (less than 1 W/m) which has the effect of lowering the overall system through-plane thermal conductivity. In one embodiment, the encapsulation layer comprises polyethylene terephthalate polymer.

In another embodiment, the encapsulation layer is composed of multiple layers of material. For example, a multilayer material, similar to materials used to form a pouch battery cell case may be used. In one embodiment, the encapsulation layer comprises a laminate comprising three layers: a first polymer layer, a second thermally conductive layer, and a third polymer layer, with the thermally conductive layer sandwiched between the first and third polymer layers. The first and third polymer layers are preferably formed from a polymer having a very low thermal conductivity (less than 1 W/m). Examples of polymers that can be used for the first and third polymer layers include, but are not limited to, polyethylene terephthalate (PET), polyethylene (PE), polypropylene, polyamide, and nylon. Examples of thermally conductive materials that can be used in the second layer include, but are not limited to, metals (e.g., copper, stainless steel, or aluminum), carbon fibers, graphite, and silicon carbides. When a metal thermally conductive layer is used, the metal may be in the form of a foil that is sandwiched between the polymer layers.

In another embodiment, the encapsulation layer comprises a laminate comprising three layers: a first polymer layer, a second flame resistant layer, and a third polymer layer, with the flame resistant layer sandwiched between the first and third polymer layers. The first and third polymer layers are preferably formed from a polymer having a very low thermal conductivity (less than 1 W/m) as discussed previously. Examples of flame resistant materials that can be used in the second layer include, but are not limited to, metals (e.g., copper, stainless steel, or aluminum), mica, polybenzimidazole fiber (PBI fiber), coated nylon, melamine, modacrylic, and aromatic polyamide (aramid). When a metal thermally conductive layer is used, the metal may be in the form of a foil that is sandwiched between the polymer layers.

Metals are a preferred material for use in a laminate encapsulating layer. Metals provide both thermally conductive properties and flame resistance to the encapsulation layer. By using a single material to provide both flame resistance and thermal conductivity, the thickness of the encapsulating layer can be minimized.

Whether a single layer (polymer or metal) or a laminate layer is used, the insulating layer can be encapsulated by the encapsulating layer by attaching the encapsulating layer to at least a portion of the support member. The encapsulation layer can be attached by heat staking. As used herein the term "heat staking" refers to a process connecting two separate pieces of polymeric materials by fusing with heat. In a heat staking process, one, or both, of the polymeric pieces are heated above the glass transition temperature of the material used to form one, or both, of the polymeric pieces. Heating the polymeric pieces above the glass transition temperature causes the material of one or both pieces to become soft and fuse with the other piece. In one embodiment, the encapsulation layer is attached to at least a portion of the support member using a heat staking process.

In an alternate embodiment, the encapsulation layer is sealed to itself. In this alternate embodiment, the encapsulation layer is extended beyond the support members and placed in contact with itself. Once again, a heat staking process can be used to fuse the encapsulation layers together, forming a seal between the two layers. In one embodiment, a single encapsulation sheet is used to encapsulate the insulation layer. In this embodiment, the encapsulation sheet covers one side of the insulation layer and is then folded over to cover the other side of the insulation layer. The ends of the encapsulation sheet are placed on top of each other and heat staked to enclose the insulation layer in the encapsulation layer. One, two, or three edges of the encapsulation sheet can be joined together to form an encapsulation layer.

In another embodiment, two separate encapsulation sheets can be used to encapsulate the insulation layer. The first sheet can be placed covering one side of the insulation layer in contact with the support member. A second sheet is then placed covering the opposing side of the insulation layer, also in contact with the opposing side of the support member. The first sheet and second sheet are then heat staked to attach the sheets to at least a portion of the opposing sides of the support member. In another embodiment, a first sheet and a second sheet are positioned as discussed previously on opposing sides of the insulation layer. The first sheet and the second sheet extend beyond the support member allowing the sheets to contact each other. The ends of the encapsulation sheet are placed on top of each other and heat staked to enclose the insulation layer in an encapsulation layer that is composed of the two encapsulation sheets.

**FIG. 6** shows a system and method of producing a laminate encapsulating layer. In the embodiment depicted in **FIG. 6** a laminate is made from two polymer films that serve as the outer surfaces of the laminate sheet. A metal foil is used as the thermally conductive/flame resistant layer. Two separate polymer rolls of film are fed to a laminator along with two separate metal foil sheets. The sheets are combined and sealed in the lamination step, with the metal foil being sandwiched between the two polymer sheets. The metal foil sheets are separated by a space to allow a fold to be made in the laminate.

The laminated sheet is carried to a creasing device, that places creases in the laminate sheet to allow folding of the laminate sheet into an envelope form. After the creases are placed in the laminate sheet, the sheet is extended and cut into the appropriate size for encapsulation of an insulation layer. After cutting, the laminate sheet is folded into an envelope shape, and the insulation layer and surrounding support members are placed in the envelope shaped encapsulating layer. A flap that is formed at the edge of the laminate sheet is folded over to seal the insulation layer and the support member within the laminate sheet. In the final step, the laminate sheet is heated, causing the polymer layers to melt and fuse together. Alternatively, during the final heating step, the laminate sheet may be melted and fused with the support member. A heat staking process may be used for the final sealing step. In the heat staking process a metal staking device is heated to a temperature above the glass transition temperature of the polymers. The metal staking device is pressed against the laminate sheet causing the contacted portions of the laminate sheet to melt and fuse upon cooling. In a preferred embodiment, the polymer is polyethylene terephthalate (PET) and the metal foil is stainless steel.

The encapsulation member can reduce or eliminate the generation of dust or particulate material shed from the insulation layer. Additionally, the encapsulating layer can be formed from a material that allows markings or printed writing to be made on the insulation barrier. The marking of the insulation layer is not always possible.

The encapsulation layer may include at least one vent that allows air to flow in and out of the panel. The encapsulation member may include at least one filter that filters particulate matter. In an exemplary embodiment, the encapsulation layer includes a vent that allows air to flow in and out of the panel, and a particulate filter over the vent that keeps particulate matter within the encapsulation member. In another embodiment, the encapsulation layer includes edge seals which include at least one vent and at least one particulate filter. In a further embodiment, the encapsulation layer includes edge seals which include at least one vent and at least one particulate filter, wherein the vents in the edge seals allow air to flow in and out of the encapsulation member edges, and wherein the filters capture and retain particulate matter in the flowing air to prevent contamination of the air outside the encapsulation layer with particulate matter.

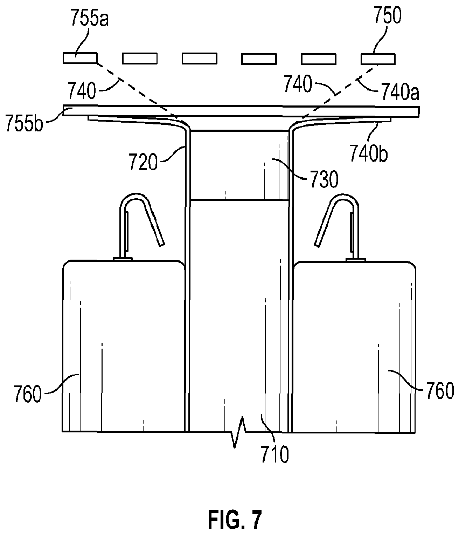

In another embodiment, the encapsulation layer may include an extension portion. The encapsulation layer may be composed of metal foil, a laminate that includes a metal foil or a polymer having elastic properties, or the encapsulation layer can be composed of a polymer having elastic properties. Two sheets of the encapsulating layer may be placed on opposing sides of the insulation layer, in contact with the support member. **FIG. 7** depicts a side view of an insulation layer **710** that is covered by an encapsulation layer **720** on opposing sides. The encapsulation layers, partially, or preferably completely, encapsulate the insulation layer and are attached to the support members **730.** If metal foil layers are used as an encapsulation layer, the metal foil can be attached to the support member by crimping or by welding.

In an embodiment depicted in **FIG. 7****,** one or both of the encapsulation layers comprise an extension portion **740** that extends beyond a portion of the support members toward an interior surface **750** (e.g., sidewall or a top) of an enclosure that contains the battery cells. During assembly, the interior surface starts at position **755a.** In this position, the interior surface **755a** is in contact with the extension portion **740a.** As the enclosure holding the battery cells or modules is assembled (e.g., by placing a top onto the enclosure) the interior surface **755a** moves to position **755b.** During this assembly process, the extension portion **740a** is bent into position **740b.** In an embodiment, the extension portion can be creased prior to use so that when the extension portion comes into contact with the interior of the enclosure, the extension portion is automatically bent at the correct position to allow the extension portion to form a seal.

As shown in **FIG. 7****,** contact of the extension portion in position **740b** with the interior surface of the enclosure in position **755b** forms a seal between battery cells **760.** The formation of a seal between the insulation barrier and the interior surface of the enclosure can help to thermally isolate the battery cell from adjacent battery cells. This is particularly useful for preventing a battery cell undergoing thermal runaway from causing thermal runaway events in adjacent batteries.

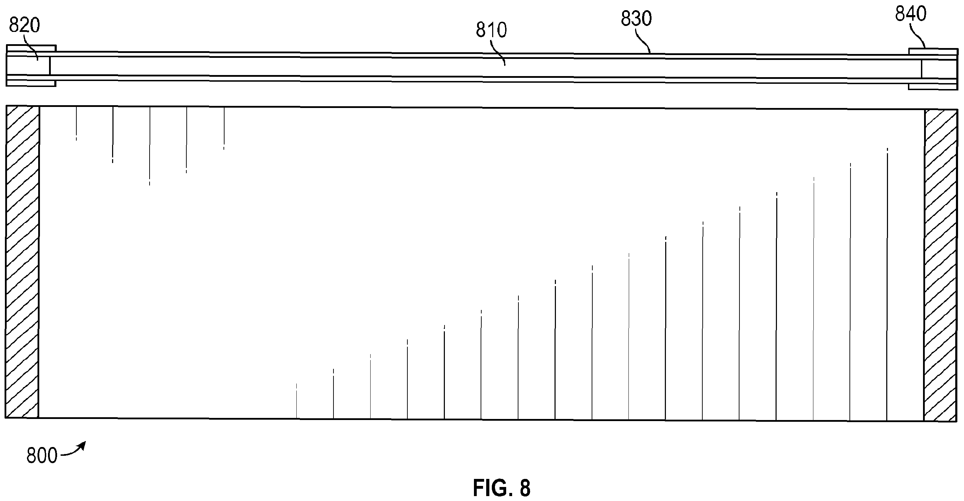

In an embodiment, an insulation barrier has one or more adhesive pads coupled to the encapsulation layer. **FIG. 8** depicts a top view and a side view of an insulation barrier **800** having adhesive pads **840.** Insulation layer **810** is encapsulated by an encapsulation layer **830.** A support member **820** is used to support and facilitate encapsulation of the insulation layer, as discussed previously. In addition to the encapsulation layer, one or more adhesive pads **840** (e.g., one, two, three, four, or more adhesive pads) are attached to the outer surface of the encapsulation layer. Preferably, the adhesive pads are coupled to the encapsulation layer proximate to the support members, as depicted in **FIG. 8****.** **FIG. 1** also depicts an embodiment of an insulation barrier having adhesive pads **140.**

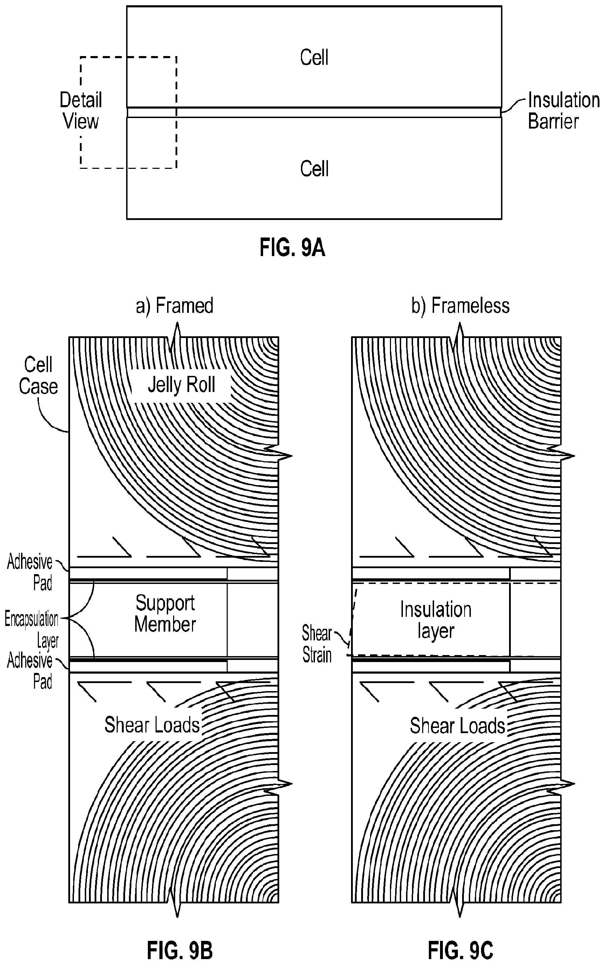

**FIG. 9A** depicts a top view of an insulation barrier placed between two battery cells. In **FIG. 9B****,** adhesive pads are positioned between the insulation barrier and the battery cells to provide a cushion between the insulation barrier and the battery cell. The adhesive pads can be single sided adhesive pads or double sided adhesive pads. In an embodiment where the adhesive pads are single sided, the adhesive is used to adhere the adhesive pads to the encapsulation layer. The opposing, non-adhesive portion of the adhesive pads will rest against the adjacent battery cell, providing a cushion between the insulation barrier and the battery cell. In a preferred embodiment, the adhesive pads are formed from a double-sided adhesive. Similar to the single-sided adhesive pads, one side of the double sided adhesive pads is attached to the encapsulation layer. The opposing side of the double-sided adhesive pads comprise an adhesive surface that is used to adhere the adhesive pad to the battery cell. Having the insulation barrier adhered to the battery cell (through the adhesive pads) can aid with manufacturing by keeping the insulation barrier aligned with the battery as the battery module (or battery pack) is assembled. In the absence of an adhesive, the insulation barrier could slip out of alignment with the battery cell, requiring the manufacturer to periodically realign the insulation barriers with the battery cells.

As shown in **FIG. 9****,** in a preferred embodiment, double sided adhesive pads are placed on opposing sides of the insulation barrier. The use of opposing adhesive pads allows the insulation barrier to be adhered to both adjacent battery cells. This ensures that proper alignment between the battery cells and the insulation barrier is maintained throughout the manufacturing process. The use of adhesives can also be helpful in maintaining alignment of the insulation barrier with the battery cells during use of the battery cells. As has been discussed previously, battery cells will swell during the lifetime of the energy storage system. Given the tight tolerance inside a packed battery module or battery pack, the swelling of the battery cells can cause the insulation barriers to be displaced from an aligned position. Having an adhesive pad that adheres the insulation barrier to the battery cell can help inhibit or prevent the displacement of the insulation barrier with respect to the battery cell during normal operation of the energy storage system.

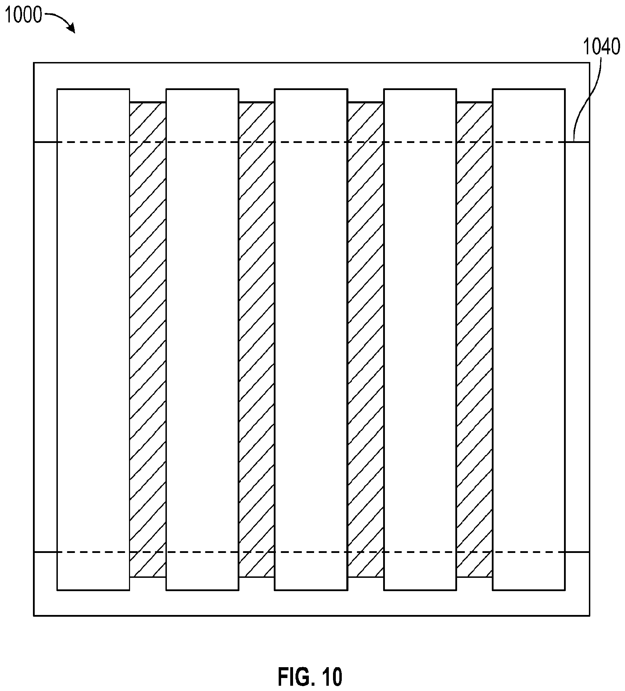

Alternatively, or in addition to, the use of adhesives to maintain the battery cells in alignment with the insulation barriers, a registration system may be used to assist with alignment. In an embodiment depicted in **FIG. 10****,** one or more registration guides **1040** are positioned inside a battery module (or battery pack) enclosure **1000.** The registration guide, in one embodiment, may be a rod that extends from one end of the enclosure to the opposite end of the enclosure, substantially perpendicular to the longitudinal axis of the battery cells and the insulation barrier. As depicted in **FIG. 2****,** a registration element **145** may be formed in the support member. In this specific embodiment, the registration element is an opening that is formed in the support member. The opening has a diameter that is equal to, or slightly greater than the diameter of the registration guide. During assembly the insulation barrier can be aligned with the battery cells by using the registration elements (e.g., the openings) to move the insulation barrier along the registration guides (e.g., a rod) into position. Other types of registration systems can be used include registration systems that use projections/indentations for as registration guides/elements. Trays or channels can also be used in a registration system.

**FIG. 9** further illustrates an advantage of using a support frame with an insulation layer. **FIG. 9C** depicts an insulation layer that is positioned between two battery cells. In **FIG. 9C****,** no support members are attached to the insulation layer. As the battery cells swell, the insulation layer is compressed. This creates shear strain in the insulation layer, causing the insulation layer to become displaced and extend away from the battery cell, as depicted in **FIG. 9C****.** In contrast, in **FIG. 9B****,** a support member surrounds the sides of the insulation layer. When the battery cells begin to expand, the expansion of the insulation layer is contained by the support frame, which prevents the insulation layer from extending beyond the battery cells. This can be particularly useful when the battery cells are packed into a tight enclosure and displacement of the insulation layer can affect the integrity of the enclosure and the electronics associated with the sidewalls of the enclosure.

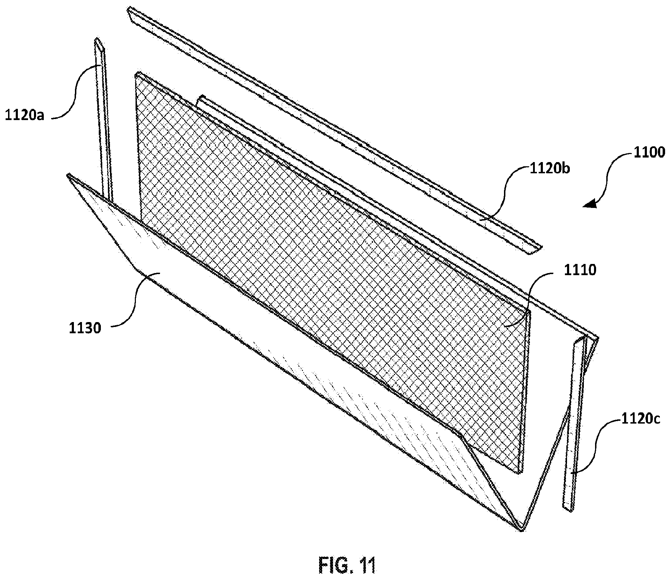

**FIG. 11** depicts an alternate embodiment of an insulation barrier composed of an intumescent material and a thermally conductive encapsulation layer. Insulation barrier **1100** includes an insulation layer **1110** is encapsulated by an encapsulation layer **1130.** A support member **1120** is used to support and facilitate encapsulation of the insulation layer, as discussed previously. In this embodiment, support member **1120** comprises three segments (**1120a**, **1120b,** and **1120c**) which are joined together to partially surround the insulation layer.

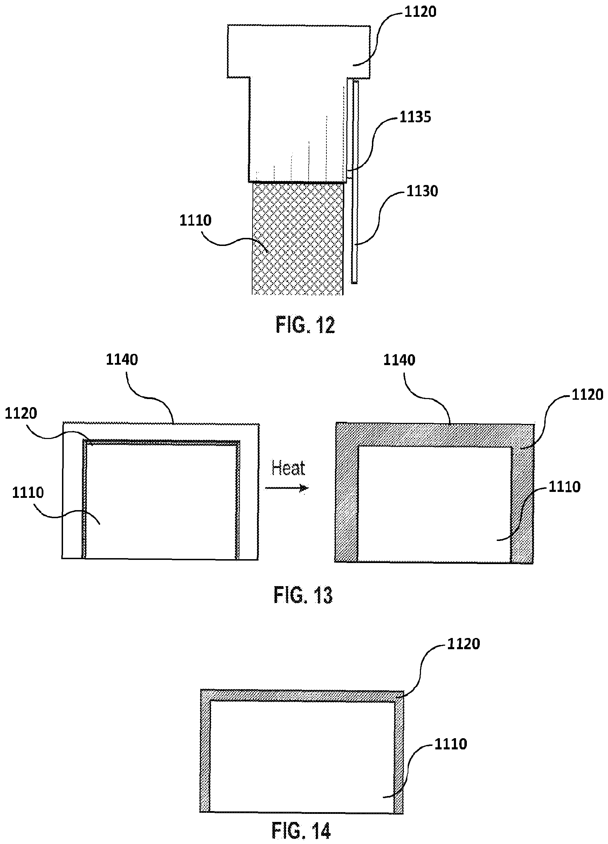

**FIG. 12** depicts a close-up view of the support member coupled to the insulation layer. Support member **1120** at least partially surrounds insulation layer **1110** as shown in **FIG. 11****.** Encapsulation layer **1130** is attached to the support member using a seal **1135.** A seal can be created by placing the encapsulation layer against the support member and melting the encapsulation layer to form a bond. Alternatively, a sealing material (e.g., an adhesive or a melted polymer) can be applied to the support member and the encapsulation layer pressed onto the sealing material. Sealing the encapsulation layer against the support member can minimize the amount of particulate matter from the insulation layer within the battery enclosure.

**FIG. 13** depicts a schematic view of an intumescent support member **1120** before and after a high temperature event (e.g., a thermal runaway event). During normal use (pictured on the left) support member **1120** has a minimal thickness and a gap exists between the support member and the wall **1140** of the battery cell/module enclosure. As used herein a high temperature event occurs when the temperature reaches greater than 90 °C, greater than 130 °C, or greater than 180 °C. When a high temperature event occurs the battery cell components will begin to degrade causing a runaway condition that propagates to other battery cells. As shown in FIG. 13, when a high temperature event occurs, the intumescent support member will expand, filling the gap between the insulation layer **1110** and the enclosure wall **1140.** Filling the gap creates a thermal and physical barrier between the insulation layer and the enclosure wall, preventing heat and particulate matter from contacting adjacent battery cells.

**FIG. 14** depicts an embodiment of an insulation layer **1110** that includes a U-shaped support member **1120** that substantially surrounds the insulation layer **1110.** The lower side of the insulation layer is left open in this embodiment, and is generally in contact with the bottom of the enclosure.

Insulation layers, particularly insulation layers the include an aerogel, tend to produce particulate matter (dust) that can be detrimental to the electrical storage systems, creating manufacturing problems. The release of particulate matter can be mitigated by using an encapsulation layer, as discussed above. The encapsulation layer is typically sealed around the insulation layer so that particles and gases cannot enter or exit the encapsulation layer. During compression of the encapsulation layer, the encapsulation layer could rupture releasing particles and gas into the battery module. To mitigate this problem, a particle capture member can be added to the support member. Particles produced during compression of the insulation can be captured and at least partially retained within the particle capture member. A particle capture member, as used herein, refers to a layer of material that can trap particles that impinge on the material. Examples of materials used for the particle capture member include, but are not limited to, foam (open cell or closed cell), woven materials, non-woven materials (e.g., felt, batting, matted fabric), or a webbed material. Generally, the particle capture member is made from a material that allows gas to pass through the material, while particles are retained in the particle capture member.

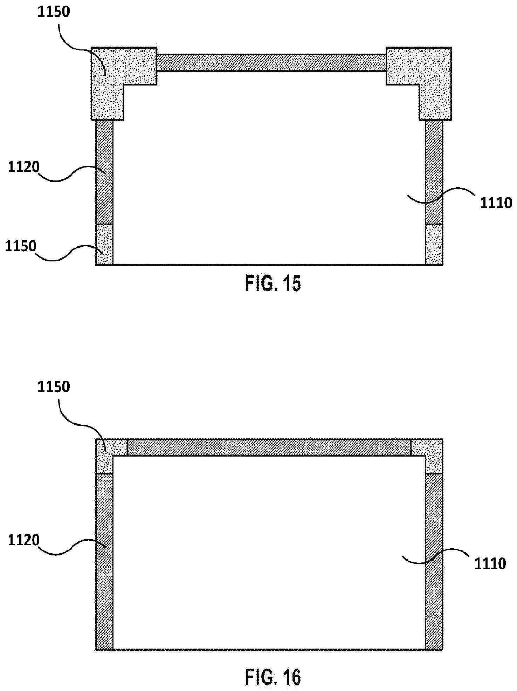

**FIG. 15** depicts an embodiment of an insulation barrier having an insulation layer **1110** at least partially surrounded by a support member **1120.** The insulation barrier further includes openings at one or more corners free of the support member to permit air flow out of the insulation layer during compressing. The openings may be filled with particle capture members **1150** to inhibit or prevent particles (e.g., aerogel) from escaping out of the insulation barrier. In the embodiment shown in **FIG. 15****,** the particle capture members **1150** may be larger than the support member, and may partially overlap with the support member. **FIG. 16** depicts an alternate embodiment of a support member having particle capture members incorporated into the openings formed in the corners of the support members. In **FIG. 16** the particle capture members have substantially the same size as the support member.

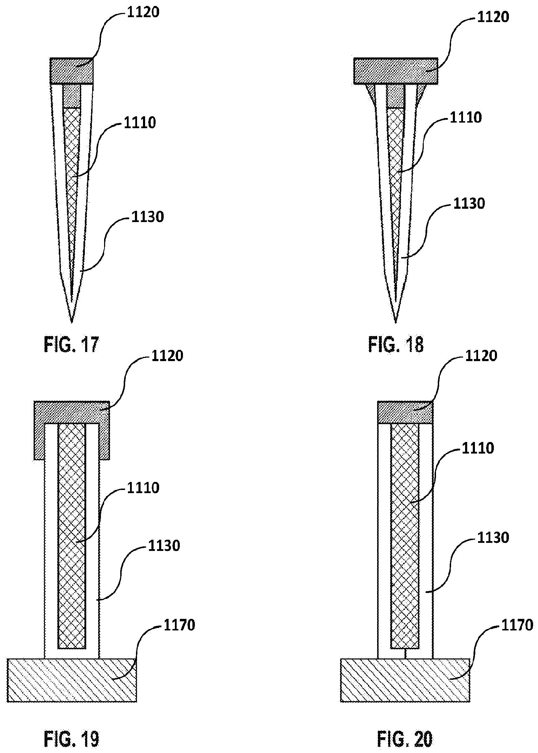

**FIG. 17** depicts a side view of an insulation barrier having an intumescent support member **1120** coupled to an insulation layer **1110** and an encapsulation layer **1130.** The intumescent support member can be T-shaped for better sealing of the gap between the insulation layer and the battery module housing. As shown in **FIG. 12****,** the encapsulation layer **1130** can be adhered to the T-shaped intumescent support member by melting a portion of the encapsulation layer or through the use of an adhesive.

**FIG. 18** depicts an alternate embodiment of an insulation barrier. In this embodiment, a T-shaped intumescent support member **1120** is coupled to an insulation layer **1110** and an encapsulation layer **1130.** This embodiment differs from the embodiment depicted in FIG. 17, in that the intumescent support member **1120** is wrapped around the edge of the encapsulation layer 1130. Wrapping the support member around an edge of the encapsulation member will help provide improved isolation of the battery cell when the intumescent support member is triggered by a thermal runaway event.

**FIG. 19** depicts another embodiment of an insulation barrier. In this embodiment, the encapsulation layer **1130** is U-shaped to increase the surface area of the encapsulation layer with a heat exchange element **1170.** The support member **1120** can be wrapped around the edge of the encapsulation layer **1130.** During use, heat generated by adjacent battery cells is transferred through a thermally conductive encapsulation layer **1130** to the heat exchange element **1170.** The heat is then transferred away from the battery cell through the heat exchange element.

**FIG. 20** depicts an alternate embodiment of an insulation barrier. Similar to the insulation barrier of FIG. 19, the insulation barrier of FIG. 20 includes a broadened surface area for increased contact of the encapsulation layer 1130 with the heat exchange element 1170. The encapsulation layer is composed of two L-shaped pieces. The L-shaped pieces are disposed on opposing faces of the insulation barrier **1110.** During use a slight gap can exist at the ends of the L-shaped encapsulation pieces. This gap allows some flexibility to the encapsulation layer. As the battery cell expands during use, the bottom arms of the L-shaped encapsulation pieces move toward each other and eventually contact each other, as shown in FIG. **20****.**

In an embodiment, an insulation barrier for use in an electrical energy storage system includes an insulation layer and a support member surrounding at least a portion of the insulation layer. The insulation layer also includes an encapsulation layer at least partially surrounding the insulation layer. One or more sealing tabs are coupled to the support member. The sealing tabs are made from a shape-memory material and are positioned such that, when subjected to heat, the sealing tabs extend away from the support member. For example, during normal battery usage the sealing tabs are in a first position. In the first position the sealing tabs substantially rest against the support member. When heated the scaling tabs move into a second position, In the second position the sealing tabs extend away from the support member into contact with the enclosure.

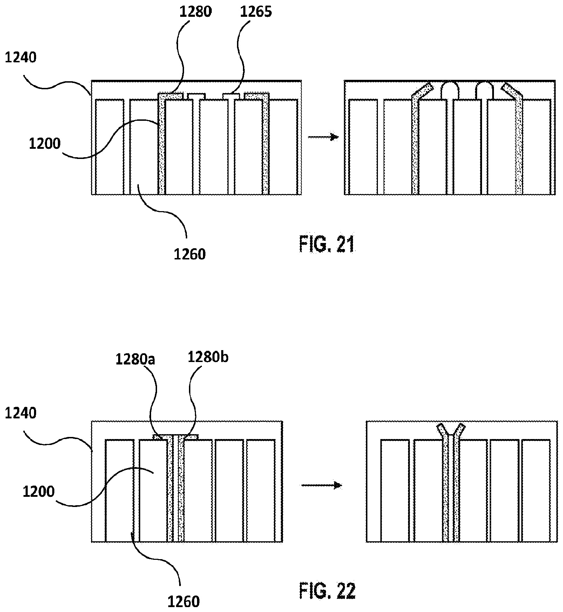

**FIG. 21** depicts a schematic diagram of a battery enclosure (e.g., a battery module enclosure or battery pack enclosure). An insulation barrier **1200** is positioned between each battery cell (or battery module) **1260.** Insulation barrier includes an insulation layer and an encapsulation layer as described herein. Insulation barrier **1200** also includes a sealing tab **1280** which is positioned between the insulation layer and battery module/pack enclosure **1240.** During normal use of the battery module/pack, the sealing tabs remain in an "open" position, with the sealing tab folded down over the insulation barrier as shown in the right side of the figure. When a thermal runaway event occurs, the heat from the event will reach the sealing tabs and induce a position change, as shown in the right hand portion of the figure.

During a thermal runaway event, the heat from the failing battery cell/module will induce a change in the sealing tabs as shown in **FIG. 21****.** When hot air (e.g., from a failed battery cell or module) reaches the sealing tabs, the heat will cause the sealing tabs to change shape and come into contact with a portion of the enclosure. The sealing tabs, in contact with the enclosure, form an additional barrier to heat and particles that can be expelled during a thermal runaway event. Additional tabs **1265** can also be present which further protects a battery module from damage. Additional tabs **1265** can be made from intumescent materials. When heated, the additional tabs **1265** expand to contact with the enclosure **1240.**

Sealing tabs **1280** can be made from a shape-memory alloy. A shape-memory alloy is an alloy that has two distinct states when heated. In the first state, the sealing tabs are in a relaxed position against the insulation layer. When heated, the sealing tabs move into a second position with the sealing tab in contact with the enclosure. An exemplary shape-memory alloy that can be used to form a sealing tab is a nickel-titanium alloy, commonly known as nitinol.

**FIG. 22** depicts an alternate embodiment of a battery enclosure. In this embodiment, two pieces sealing tabs are placed apart to protect the battery cells in the middle of the module. When activated by heat, the shape memory sealing tabs, because of their placement next to each other, block heat and mass transfer (e.g., particles from the rupturing battery cell) from both directions.

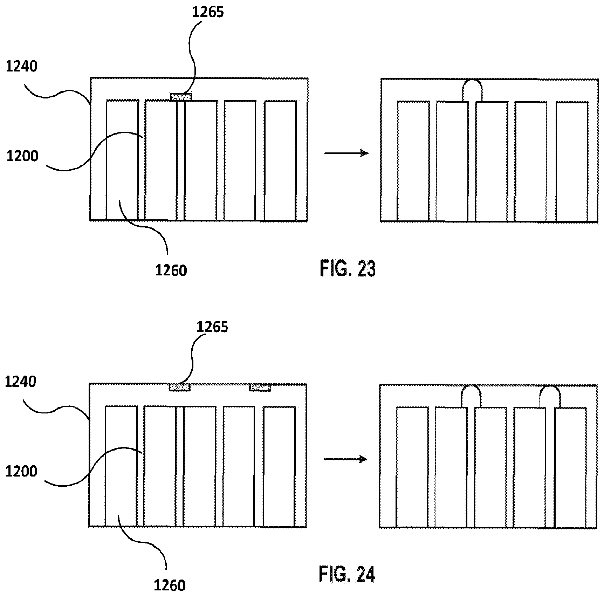

**FIGS. 23** and **24** show alternate arrangements of sealing tabs **1265.** In these embodiments, sealing tabs can be located on the top of the enclosure and/or on the support member. In **FIG. 23****,** sealing tabs are placed over the intumescent material and bent towards the module housing. Placement of the sealing tabs in this orientation provides additional thermal and particulate blocking during thermal runaway. During a thermal runaway event, the sealing tabs react to the heat by expanding and forming a seal between battery cells, as pictured in the figures. In **FIG. 24****,** sealing tabs are coupled to the support member and the enclosure. The sealing tabs attached to the enclosure expand downward, while the sealing tabs on the support member expand upwards. In devices having a single separation tab associated with a pair of adjacent battery cells, the separation tabs can be used to block heat and mass transfer in one direction. Two sealing tabs can be placed next to each other to block heat and mass transfer from both directions.

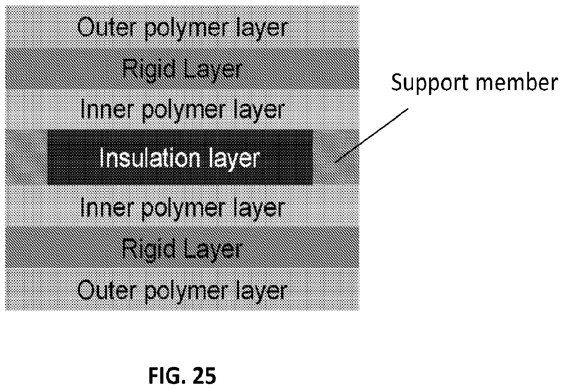

**FIG. 25** depicts a schematic diagram of an embodiment of an insulation barrier that includes an encapsulated insulation layer. The insulation layer includes an insulation layer as previously described herein. A support member surrounds at least a portion of the insulation layer. The encapsulation layer is a laminate film composed of three layers: an outer polymer layer; a rigid layer; and an inner polymer layer. Generally, the support member is composed of a material that is different from a material used for the insulation layer.

The outer polymer layer provides wear protection to the insulation layer. During use, external stress can cause the insulation layer to be damaged. Damage to the insulation layer can compromise the heat insulation properties of the insulation layer. External stress that can occur to an unprotected insulation layer include, but are not limited to, stress caused by expansion of the battery cells, changes in ambient temperature, external impact, external rupture, and external scratching of the insulation layer. In some aspects of the present disclosure the outer polymer layer is selected from a material that protects the insulation layer from external stresses. Exemplary polymers that can be used as the outer polymer layer include, but are not limited to, polyoxymethylene, acrylonitrile butadiene styrene, polyamide-imide, polyamide, polycarbonate, polyester, polyetherimide, polystyrene, polysulfone, polyimide, and terephthalate. Specific polymers that can be used for the outer polymer layer include polyethylene terephthalate ("PET") and oriented nylon ("ONy").

It should be understood that while a single outer polymer layer is described above, the outer polymer layer can be composed of two or more polymer layers. When multiple outer polymers layers are used, the additional outer polymer layers may be formed from the same polymer or different polymers. In an aspect of the invention, the outer polymer layer is composed of an ONy polymer layer having an overlying PET polymer layer.

As shown in **FIG. 25****,** inner polymer layer **126** is in contact with insulation layer **110.** Inner polymer layer **110** at least partially surrounds the insulation layer, protecting the insulation layer from external chemical and mechanical damage. The inner polymer layer also serves as a barrier that keeps particulate matter from the insulation layer contained within the encapsulation layer, inhibiting or preventing damaging particles from being dispersed in the electrical energy storage system. Inner polymer layer can be composed of a polyolefin polymer. Exemplary polyolefin polymers that can be used include, but are not limited to, polypropylene (PP) or polyethylene (PE).

In a specific embodiment, outer polymer layer is composed of polyethylene terephthalate ("PET") or a nylon polymer. Insulation layer is composed of an aerogel material, Inner polymer layer is composed of polypropylene ("PP") or polyethylene ("PE"). Support member is composed of an intumescent material.

As shown in **FIG. 25****,** the encapsulation layer may be composed of two separate laminate films (e.g., a top laminate film and a bottom laminate film) which are connected to each other to form a seal around the insulation layer. In an alternate aspect, the encapsulation layer can be formed from a single laminate film that is folded over and sealed to itself to encapsulate the insulation layer.

In one aspect, inner polymer layer comprises a material that can be heat welded to the support member. As shown in **FIG. 25****,** the inner polymer layer disposed on, for example, the top face of the insulation layer can be heat welded to the top face of the support member to form a seal around the insulation layer. A thermal seal may be formed by applying a heated object to the top laminate film and/or the bottom laminate film, in a position that is exterior to the insulation layer. Heat from the heated object will raise the temperature of the polymer to a point that the polymer used in the inner polymer layer and the support member can at least partially fuse together. Alternatively, the inner polymer may be adhered to the support member using an adhesive material. For example, glue or an adhesive tape can be used to join the inner polymer layer of the laminate film to the support member.

The inner polymer layer can also provide chemical resistance and/or heat resistance to the insulation layer. During use, the temperature of battery cells can increase due to the electrical demands of the battery module. Likewise, battery modules can increase in temperature as the electrical demands on the battery pack increase. The increase in temperature of the components that are separated by the insulation layers can stress the insulation layer. Additionally, chemical leakage from battery cells can chemically damage an insulation layer, compromising the thermal properties of the insulation layer. In some aspects of the present invention, the inner polymer layer is chosen from a material that protects the insulation layer from chemical and heat damage. Polyolefin polymers provide good chemical and heat resistance to the insulation layer.

In one aspect, a rigid layer is disposed between inner polymer layer and outer polymer layer. The rigid layer is used, in some aspects, to provide support and protection of the insulation barrier. For example, an insulation layer that comprises a woven or non-woven fibrous reinforcement support. Such support-based insulation layers, due to their light weight and low stiffness, can be difficult to install between in electrical energy storage system, particularly between battery cells. These difficulties are compounded in mass production settings. Placing a rigid layer in the encapsulation layer can act as a support which allows the insulation barrier to be more easily manipulated during manufacturing.

Rigid layers can also provide additional heat and mechanical protection when used in battery modules. In some aspects of the disclosure, the insulation barrier is placed between the battery cells in a battery module. During a thermal runaway event, a battery cells may explosively rupture, causing hot particles and gasses to be ejected throughout the module. These ejected materials can cause adjacent battery cells casings to be compromised, sometimes causing the adjacent battery cells to go into a runaway state. An insulation barrier comprising a rigid layer can inhibit or prevent particle matter and gasses from damaging adjacent battery cells. The malleable layer can also protect the insulation layer from moisture and air.

In one aspect, a rigid layer can be a metal foil or a polymer. Aluminum is the most common metal used in a laminate encapsulation layer, however other rigid metal foils can be used such as stainless steel, titanium, and copper foils.

Use of metal foils can also add heat transfer properties to the insulation barrier. When thermal runaway of a battery cells occurs, the battery cell heats to very high temperature. This heat can be radiated to adjacent battery cells, causing an increased chance of the adjacent battery cells entering a runaway state. Use of a metal foil can improve the heat properties of the insulation barrier by providing a thermally conductive metal foil in the insulation layer. The heat produced by an adjacent runaway battery cell can be transferred to the metal foil layer. The metal foil layer can be connected to a portion of the casing (e.g., a cooling plate) that allows the heat to be transferred away from the battery cells through the metal foil.

The rigid layer can also be composed of a polymer. Exemplary polymers that can be used as a rigid layer in the laminate film include, but are not limited to, polybenzimidazole fiber (PBI fiber), nylon, melamine, modacrylic, and aromatic polyamide (aramid). Other materials can also be used as the rigid layer. The other materials include, but are not limited to, carbon fibers, graphite, silicon carbide, and mica.

The laminate film used as the encapsulation layer may be composed as a unitary film composed of multiple layers, as described herein. In an aspect, the laminate film can be formed by placing the rigid layer between the two polymer layers and using heat and/or pressure to fuse the inner and outer polymer layer together. In another aspect, an adhesive glue or tape can be used to hold the layers together. For example, an adhesive can be disposed between the outer polymer layer and the rigid layer and/or the inner polymer layer and the rigid layer.

In an aspect the thickness of the encapsulation layer is from about 30 µm to about 300 µm or from about 70 µm to about 200 µm. The encapsulation layer can have a thickness of up to about 30 µm, up to about 40 µm, up to about 50 µm, up to about 60 µm, up to about 70 µm, up to about 80 µm, up to about 90 µm, up to about 100 µm, up to about 120 µm, up to about 150 µm, up to about 200 µm, up to about 250 µm, or up to about 300 µm. When the encapsulation layer is a laminate film, the inner polymer layer can have a thickness from about 10 µm to about 50 µm; the rigid layer can have a thickness from about 50 µm to about 150 µm; and the outer polymer layer can have a thickness from about 10 µm to about 50 µm.

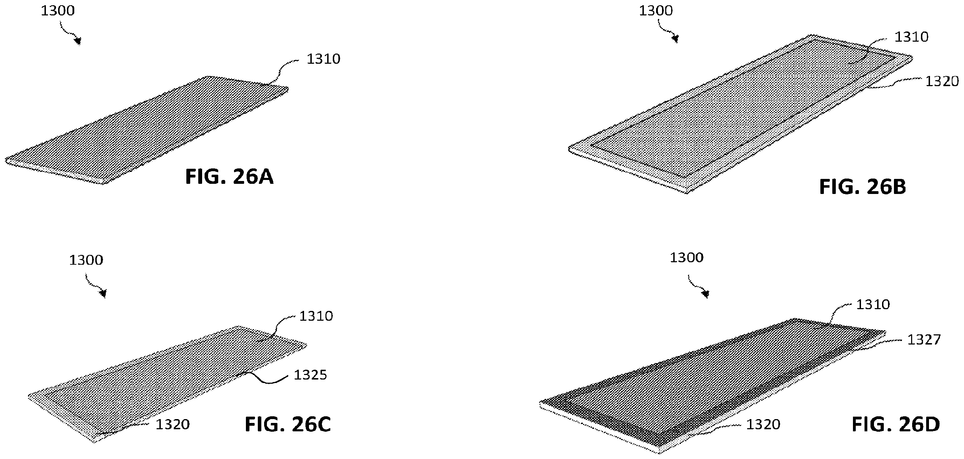

**FIG. 26A** depicts an insulation layer **1310** of insulation barrier **1300.** **FIG. 26B** shows the insulation layer **1310** dispose in a support member **1320** which completely surrounds the insulation layer. **FIG. 26C** depicts an alternate embodiment, in which support member **1320** partially surrounds the insulation layer **1310,** leaving the bottom edge **1325** of the insulation layer uncovered.

**FIG. 26D** depicts an insulation layer **1310** which is completely surrounded by support member **1320.** To improve adhesion of the encapsulation layer to support member **1320,** the surface **1327** of the support member may be roughed.

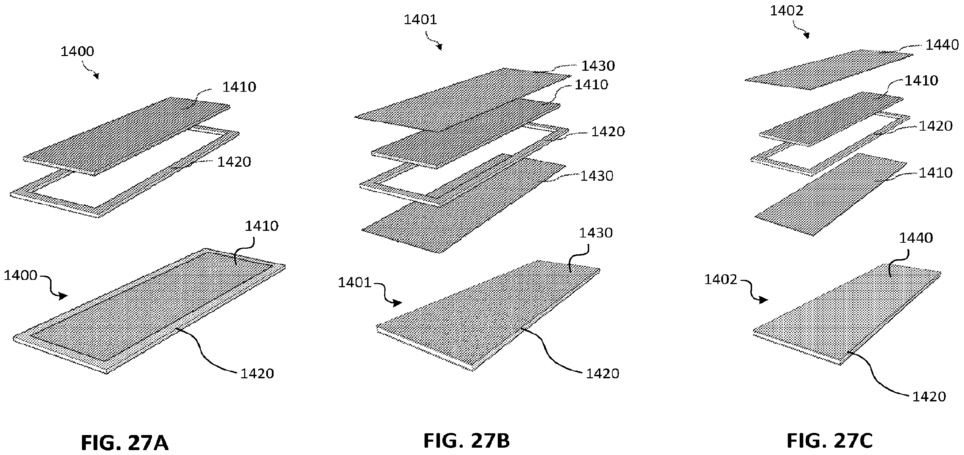

**FIG. 27A** depicts an insulation barrier **1400** having an insulation layer **1410** disposed in a support member **1420.** Such an embodiment represents the simplest way to provide support to the insulation layer.

**FIG. 27B** depicts an alternate embodiment of an insulation barrier **1401** having a polymer film encapsulation layer. Insulation barrier **1401** has an insulation layer **1410** disposed in a support member **1420.** A polymer film **1430** is used to encapsulate the insulation layer by adhering the polymer film to the support member. In this embodiment, a polymer film **1430** is applied to the top and bottom sides of the support member to encapsulate the insulation layer within the support member.

**FIG. 27C** depicts an alternate embodiment of an insulation barrier **1402** which includes a rigid layer as an encapsulation layer. Insulation barrier **1402** has an insulation layer **1410** disposed in a support member **1420.** A rigid layer **1440** is used to encapsulate the insulation layer by adhering the rigid layer to the support member. The rigid layer can be adhered to the support member using an adhesive such as glue or an adhesive tape. The rigid layer **1440** is applied to the top and bottom sides of the support member to encapsulate the insulation layer within the support member.

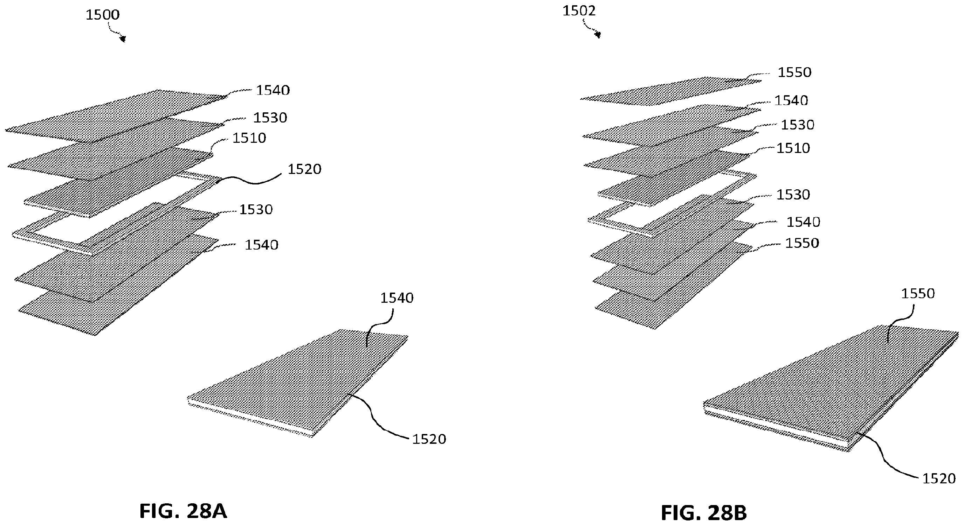

**FIG. 28A** depicts an alternate embodiment of an insulation barrier **1500** which includes a rigid barrier and a polymer film as an encapsulation layer. Insulation barrier **1500** has an insulation layer **1510** disposed in a support member **1520.** A polymer film **1530** is used to encapsulate the insulation layer by adhering the polymer film to the support member. In this embodiment, a polymer film **1530** is applied to the top and bottom sides of the support member to encapsulate the insulation layer within the support member. A rigid layer **1540** is used to encapsulate the insulation layer by adhering the rigid layer to the polymer layer. The rigid layer can be adhered to the polymer layer by heat staking or using an adhesive such as glue or an adhesive tape. The rigid layer **1540** is applied to the top and bottom sides of the support member to protect the insulation layer within the support member.

**FIG. 28B** depicts an alternate embodiment of an insulation barrier **1502** which includes an insulation layer encapsulated by a laminate film. Insulation barrier **1502** has an insulation layer **1510** disposed in a support member **1520.** The laminate film is composed of an inner polymer layer **1530,** a rigid layer **1540,** and an outer polymer layer **1550,** as discussed previously herein. In this embodiment, the laminate film is applied to the top and bottom sides of the support member to encapsulate the insulation layer within the support member.

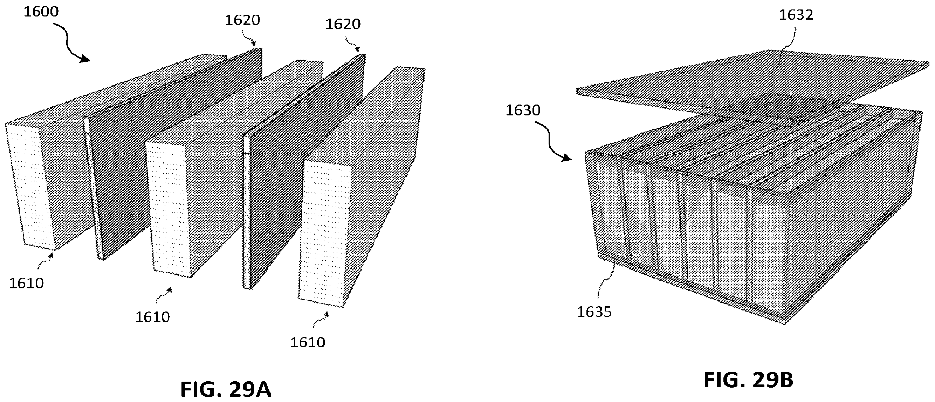

The insulation barrier according to various embodiments of the present disclosure can be used in a battery module that has a plurality of battery cells or in a battery pack that has a plurality of battery modules. The insulation barrier can be used for separating single battery cells or modules of battery cells thermally from one another. A battery pack is composed of multiple battery modules. **FIG. 29A** depicts an exploded view of a battery module **1600** having a plurality of battery cells **1610** and a plurality of encapsulated insulation barriers **1620** are positioned between the battery cells. While described in the context of separating battery cells within a module, the insulation barriers described herein can also be used to separate battery modules within a battery pack. As shown in **FIG. 29B****,** a battery module includes a casing **1630,** in which the battery cells are stored. The casing can include a lid **1632** and a case **1635.** Battery cells arc organized within the casing such that a spacing between the battery cells is present. Encapsulated insulation barriers **1620** are positioned between battery cells **1610.** The encapsulated insulation barrier can inhibit or prevent damage of adjacent battery cells when a battery cell undergoes thermal runaway or any other catastrophic batter cell failure.

To further inhibit the transfer of heat between battery cells, the encapsulated insulation barriers can have a surface area that is greater than the surface area of the battery cells. As depicted in **FIG. 29B****,** encapsulated insulation barrier **1620** extends away from the battery cells and comes into contact with the lid of the casing. This forms a barrier between the battery cells that inhibits heat and particles from being transmitted to neighboring battery cells during a thermal runaway event.

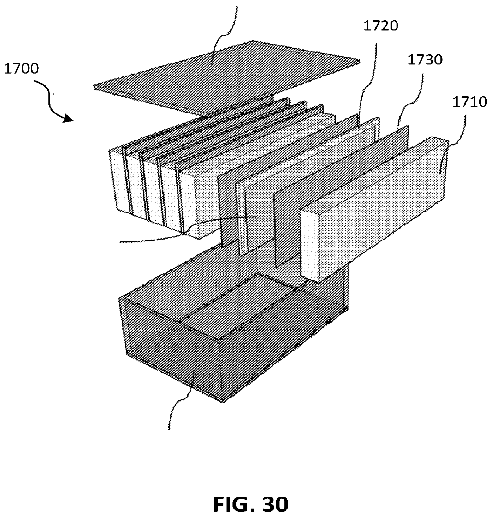

**FIG. 30** depicts an embodiment of a battery module **1700** having a plurality of battery cells **1710** and a plurality of encapsulated insulation barriers **1720** positioned between the battery cells. In this embodiment, encapsulation barriers **1720** include an insulation layer and a support member. The insulation layer, optionally, can be covered by a polymer layer, as described previously in **FIG. 27B****.** In addition to a polymer encapsulated insulation barrier, a rigid layer **1730** can be disposed between the battery cells. As previously discussed the rigid layer can provide protection to the battery cells from heat and particulate matter. Rigid layers can be placed between the insulation layers and the battery cells. As shown in **FIG. 30****,** the rigid layers can have a surface area that is greater than the surface area of the battery cells. The rigid layers **1730** extend away from the battery cells **1710** and come into contact with the lid **1732** of the case **1735**. This forms a barrier between the battery cells that inhibits heat and particles from being transmitted to neighboring battery cells during a thermal runaway event.

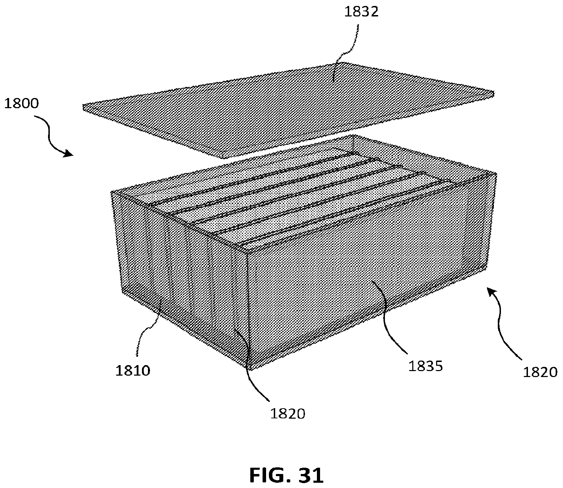

**FIG. 31** depicts an embodiment of a battery module **1800** having a plurality of battery cells **1810** and a plurality of encapsulated insulation barriers **1820** positioned between the battery cells. In this embodiment, encapsulated insulation barriers **1820** includes at least an insulation layer and a support member. The insulation layer, optionally, can be encapsulated, as described previously. As shown in **FIG. 31****,** a battery module includes a casing **1830,** in which the battery cells are stored. The casing can include a lid **1832** and a case **1835.** Battery cells are organized within the casing such that a spacing between the battery cells is present. Encapsulated insulation barriers **1820** are positioned between battery cells **1810.** As shown in **FIG. 31****,** the insulation layers have a surface area that is substantially equal to the surface area of the battery cells. The insulation layers are substantially matched and aligned with the neighboring battery cells.

As used in this specification and the appended claims, the singular forms "a", "an", and "the" include plural referents unless the content clearly dictates otherwise. As used in this specification and the appended claims, the term "or" is generally employed in its sense including "and/or" unless the context clearly dictates otherwise.

As used herein, "about" means approximately or nearly and in the context of a numerical value or range set forth means ±5% of the numerical. In an embodiment, the term "about" can include traditional rounding according to significant figures of the numerical value. In addition, the phrase "about 'x' to 'y'" includes "about 'x' to about 'y'".

Within the context of the present disclosure, the term "aerogel", "aerogel material" or "aerogel matrix" refers to a gel comprising a framework of interconnected structures, with a corresponding network of interconnected pores integrated within the framework, and containing gases such as air as a dispersed interstitial medium; and which is characterized by the following physical and structural properties (according to Nitrogen Porosimetry Testing) attributable to aerogels: (a) an average pore diameter ranging from about 2 nm to about 100 nm, (b) a porosity of at least 80% or more, and (c) a surface area of about 100 m²/g or more.

Aerogel materials of the present disclosure thus include any aerogels or other open-celled materials which satisfy the defining elements set forth in previous paragraphs; including materials which can be otherwise categorized as xerogels, cryogels, ambigels, microporous materials, and the like.

Within the context of the present disclosure, references to "thermal runaway" generally refer to the sudden, rapid increase in cell temperature and pressure due various operational factors and which in turn can lead to propagation of excessive temperature throughout an associated module. Potential causes for thermal runaway in such systems may, for example, include: cell defects and/or short circuits (both internal and external), overcharge, cell puncture or rupture such as in the event of an accident, and excessive ambient temperatures (e.g., temperatures typically greater than 55° C.). In normal use, the cells heat as result of internal resistance. Under normal power/current loads and ambient operating conditions, the temperature within most Li-ion cells can be relatively easily controlled to remain in a range of 20° C to 55° C. However, stressful conditions such as high power draw at high cell/ambient temperatures, as well as defects in individual cells, may steeply increase local heat generation. In particular, above the critical temperature, exothermic chemical reactions within the cell are activated. Moreover, chemical heat generation typically increases exponential with temperature. As a result, heat generation becomes much greater than available heat dissipation. Thermal runaway can lead to cell venting and internal temperatures in excess of 200° C.

Within the context of the present disclosure, the terms "flexible" and "flexibility" refer to the ability of a material or composition to be bent or flexed without macrostructural failure. Insulation layer of the present disclosure are capable of bending at least 5°, at least 25°. at least 45°, at least 65°, or at least 85° without macroscopic failure; and/or have a bending radius of less than 4 feet, less than 2 feet, less than 1 foot, less than 6 inches, less than 3 inches, less than 2 inches, less than 1 inch, or less than U inch without macroscopic failure. Likewise, the terms "highly flexible" or "high flexibility" refer to materials capable of bending to at least 90° and/or have a bending radius of less than U inch without macroscopic failure. Furthermore, the terms "classified flexible" and "classified as flexible" refer to materials or compositions which can be classified as flexible according to ASTM Cl 101 (ASTM International, West Conshohocken, PA).

Insulation layer of the present disclosure can be flexible, highly flexible, and/or classified flexible. Aerogel compositions of the present disclosure can also be drapable. Within the context of the present disclosure, the terms "drapable" and "drapability" refer to the ability of a material to be bent or flexed to 90° or more with a radius of curvature of about 4 inches or less, without macroscopic failure. Insulation layer according to certain embodiments of the current disclosure are flexible such that the composition is non-rigid and may be applied and conformed to three-dimensional surfaces or objects, or pre-formed into a variety of shapes and configurations to simplify installation or application.

Within the context of the present disclosure, the terms "thermal conductivity" and "TC" refer to a measurement of the ability of a material or composition to transfer heat between two surfaces on either side of the material or composition, with a temperature difference between the two surfaces. Thermal conductivity is specifically measured as the heat energy transferred per unit time and per unit surface area, divided by the temperature difference. It is typically recorded in SI units as mW/m*K (milliwatts per meter * Kelvin). The thermal conductivity of a material may be determined by test methods known in the art, including, but not limited to Test Method for Steady-State Thermal Transmission Properties by Means of the Heat Flow Meter Apparatus (ASTM C518, ASTM International, West Conshohocken, PA); a Test Method for Steady-State Heat Flux Measurements and Thermal Transmission Properties by Means of the Guarded-Hot-Plate Apparatus (ASTM C177, ASTM International, West Conshohocken, PA); a Test Method for Steady-State Heat Transfer Properties of Pipe Insulation (ASTM C335, ASTM International, West Conshohocken, PA); a Thin Heater Thermal Conductivity Test (ASTM C1114, ASTM International, West Conshohocken, PA); Standard Test Method for Thermal Transmission Properties of Thermally Conductive Electrical Insulation Materials (ASTM D5470, ASTM International, West Conshohocken, PA); Determination of thermal resistance by means of guarded hot plate and heat flow meter methods (EN 12667, British Standards Institution, United Kingdom); or Determination of steady-state thermal resistance and related properties - Guarded hot plate apparatus (ISO 8203, International Organization for Standardization, Switzerland). Due to different methods possibly resulting in different results, it should be understood that within the context of the present disclosure and unless expressly stated otherwise, thermal conductivity measurements are acquired according to ASTM C518 standard (Test Method for Steady-State Thermal Transmission Properties by Means of the Heat Flow Meter Apparatus), at a temperature of about 37.5 °C at atmospheric pressure in ambient environment, and under a compression load of about 2 psi. The measurements reported as per ASTM C518 typically correlate well with any measurements made as per EN 12667 with any relevant adjustment to the compression load.

Thermal conductivity measurements can also be acquired at a temperature of about 10 °C at atmospheric pressure under compression. Thermal conductivity measurements at 10 °C are generally 0.5-0.7 mW/mK lower than corresponding thermal conductivity measurements at 37.5 °C. In certain embodiments, the insulation layer of the present disclosure has a thermal conductivity at 10 °C of about 40 mW/mK or less, about 30 mW/mK or less, about 25 mW/mK or less, about 20 mW/mK or less, about 18 mW/mK or less, about 16 mW/mK or less, about 14 mW/mK or less, about 12 mW/mK or less, about 10 mW/mK or less, about 5 mW/mK or less, or in a range between any two of these values.

The term "flexural modulus" or "bending modulus of elasticity" is a measure of a materials stiffness/ resistance to bend when a force is applied perpendicular to the long edge of a sample - known as the three-point bend test. Flexural Modulus denotes the ability of a material to bend. The flexural modulus is represented by the slope of the initial straight line portion of the stress-strain curve and is calculated by dividing the change in stress by the corresponding change in strain. Hence, the ratio of stress to strain is a measure of the flexural modulus. The International Standard unit of Flexural Modulus is the Pascal (Pa or NJm2 or m-1.kg.s-2). The practical units used are megapascals (MPa or N/mm2) or gigapascals (GPa or kN/mm2). In the US customary units, it is expressed as pounds (force) per square inch (psi). In certain embodiments, insulation layers of the present disclosure have a flexural modulus of about 8 MPa or less, about 7 MPa or less, about 6 MPa or less, about 5 MPa or less, about 4 MPa or less, about 3 MPa or less. Preferably, the insulation layer of the present disclosure e.g. aerogel has a flexural modulus of about 2 MPa to about 8 MPa.

Within the context of the present disclosure, the terms "heat of combustion", "HOC" and "ΔHC" refer to a measurement of the amount of heat energy released in the combustion or exothermic thermal decomposition of a material or composition. Heat of combustion is typically recorded in calories of heat energy released per gram of aerogel material or composition (cal/g), or as megajoules of heat energy released per kilogram of material or composition (MJ/kg). The heat of combustion of a material or composition may be determined by methods known in the art, including, but not limited to Reaction to fire tests for products - Determination of the gross heat of combustion (calorific value) (EN ISO 1716, International Organization for Standardization, Switzerland; EN adopted). Within the context of the present disclosure, heat of combustion measurements are acquired according to EN ISO 1716 standards (Reaction to fire tests for products - Determination of the gross heat of combustion (calorific value)), unless otherwise stated.

Within the context of the present disclosure, all thermal analyses and related definitions are referenced with measurements performed by starting at 25 °C and ramping at a rate of 20 °C per minute up to 1000 °C in air at ambient pressure. Accordingly, any changes in these parameters will have to be accounted for (or re-performed under these conditions) in measuring and calculating onset of thermal decomposition, temperature of peak heat release, temperature of peak hear absorption and the like.

Within the context of the present disclosure, the terms "onset of thermal decomposition" and "TD" refer to a measurement of the lowest temperature of environmental heat at which rapid exothermic reactions from the decomposition of organic material appear within a material or composition. The onset of thermal decomposition of organic material within a material or composition may be measured using thermo-gravimetric analysis (TGA). The TGA curve of a material depicts the weight loss (%mass) of a material as it is exposed to an increase in surrounding temperature, thus indicating thermal decomposition. The onset of thermal decomposition of a material can be correlated with the intersection point of the following tangent lines of the TGA curve: a line tangent to the base line of the TGA curve, and a line tangent to the TGA curve at the point of maximum slope during the rapid exothermic decomposition event related to the decomposition of organic material. Within the context of the present disclosure, measurements of the onset of thermal decomposition of organic material are acquired using TGA analysis as provided in this paragraph, unless otherwise stated.

The onset of thermal decomposition of a material may also be measured using differential scanning calorimetry (DSC) analysis. The DSC curve of a material depicts the heat energy (mW/mg) released by a material as it is exposed to a gradual increase in surrounding temperature. The onset of thermal decomposition temperature of a material can be correlated with the point in the DSC curve where the Δ mW/mg (change in the heat energy output) maximally increases, thus indicating exothermic heat production from the aerogel material. Within the context of the present disclosure, measurements of onset of thermal decomposition using DSC, TGA, or both are acquired using a temperature ramp rate of 20°C/min as further defined in the previous paragraph, unless otherwise stated expressly. DSC and TGA each provide similar values for this onset of thermal decomposition, and many times, the tests are run concurrently, so that results are obtained from both.

Within the context of the present disclosure, the terms "flame time" and "TFLAME" refer to a measurement of sustained flaming of a material or composition under thermal decomposition conditions, where "sustained flaming" is a persistence of flame at any part on the visible part of the specimen lasting 5 seconds or longer. Flame time is typically recorded in seconds or minutes. The flame time of a material or composition may be determined by methods known in the art, including, but not limited to Reaction to fire tests for building and transport products: Non-combustibility test (EN ISO 1182, International Organization for Standardization, Switzerland; EN adopted). Within the context of the present disclosure, flame time measurements are acquired according to conditions comparable to EN ISO 1182 standard (Reaction to fire tests for building and transport products: Non-combustibility test), unless otherwise stated. In certain embodiments, aerogel compositions of the present disclosure have a flame time of about 30 seconds or less, about 25 seconds or less, about 20 seconds or less, about 15 seconds or less, about 10 seconds or less, about 5 seconds or less, about 2 seconds or less, or in a range between any two of these values. Within the context herein, for example, a first composition having a flame time that is lower than a flame time of a second composition, would be considered an improvement of the first composition over the second composition. It is contemplated herein that flame time of a composition is reduced when adding one or more fire-class additives, as compared to a composition that does not include any fire-class additives.

Within the context of the present disclosure, the terms "mass loss" and "ΔM" refer to a measurement of the amount of a material, composition, or composite that is lost or burned off under thermal decomposition conditions. Mass loss is typically recorded as weight percent or wt%. The mass loss of a material, composition, or composite may be determined by methods known in the art, including, but not limited to: Reaction to fire tests for building and transport products: Non-combustibility test (EN ISO 1182, International Organization for Standardization, Switzerland; EN adopted). Within the context of the present disclosure, mass loss measurements are acquired according to conditions comparable to EN ISO 1182 standard (Reaction to fire tests for building and transport products: Non-combustibility test), unless otherwise stated. In certain embodiments, insulation layer or aerogel compositions of the present disclosure can have a mass loss of about 50% or less, about 40% or less, about 30% or less, about 28% or less, about 26% or less, about 24% or less, about 22% or less, about 20% or less, about 18% or less, about 16% or less, or in a range between any two of these values. Within the context herein, for example, a first composition having a mass loss that is lower than a mass loss of a second composition would be considered an improvement of the first composition over the second composition. It is contemplated herein that mass loss of a composition is reduced when adding one or more fire-class additives, as compared to a composition that does not include any fire-class additives.

Within the context of the present disclosure, the terms "temperature of peak heat release" refers to a measurement of the temperature of environmental heat at which exothermic heat release from decomposition is at the maximum. The temperature of peak heat release of a material or composition may be measured using TGA analysis, differential scanning calorimetry (DSC) or a combination thereof. DSC and TGA each would provide similar values for temperature of peak heat release, and many times, the tests are run concurrently, so that results are obtained from both. In a typical DSC analysis, heat flow is plotted against the rising temperature and temperature of peak heat release is the temperature at which the highest peak in such curve occurs. Within the context of the present disclosure, measurements of the temperature of peak heat release of a material or composition are acquired using TGA analysis as provided in this paragraph, unless otherwise stated.

In the context of an endothermic material, the terms "temperature of peak heat absorption" refers to a measurement of the temperature of environmental heat at which endothermic heat absorption from decomposition is at the minimum. The temperature of peak heat absorption of a material or composition may be measured using TGA analysis, differential scanning calorimetry (DSC) or a combination thereof. In a typical DSC analysis, heat flow is plotted against the rising temperature and temperature of peak heat absorption is the temperature at which the lowest peak in such curve occurs. Within the context of the present disclosure, measurements of the temperature of peak heat absorption of a material of composition are acquired using TGA analysis as provided in this paragraph, unless otherwise stated.

Within the context of the present disclosure, the term "low-flammability" and "low-flammable" refer to a material or composition which satisfy the following combination of properties: i) a furnace temperature rise of 50°C or less; ii) a flame time of 20 seconds or less; and iii) a mass loss of 50 wt% or less. Within the context of the present disclosure, the term "non-flammability" and "non-flammable" refer to a material or composition which satisfy the following combination of properties: i) a furnace temperature rise of 40°C or less; ii) a flame time of 2 seconds or less; and iii) a mass loss of 30 wt% or less. It is contemplated that flammability (e.g., combination of furnace temperature rise, flame time, and mass loss) of a composition is reduced upon inclusion of one or more fire-class additives, as described herein.

Within the context of the present disclosure, the term "low-combustibility" and "low-combustible" refer to a low-flammable material or composition which has a total heat of combustion (HOC) less than or equal to 3 MJ/kg. Within the context of the present disclosure, the term "non-combustibility" and "non-combustible" refer to a non-flammable material of composition which has the heat of combustion (HOC) less than or equal to 2 MJ/kg. It is contemplated that HOC of a composition is reduced upon inclusion of one or more fire-class additives, as described herein.

### Use of the Insulation Barriers within Battery Module or Pack

Lithium-ion batteries (LIBs) are considered to be one of the most important energy storage technologies due to their high working voltage, low memory effects, and high energy density compared to traditional batteries. However, safety concerns are a significant obstacle that hinders large-scale applications of LIBs. Under abuse conditions, exothermic reactions may lead to the release of heat that can trigger subsequent unsafe reactions. The situation worsens, as the released heat from an abused cell can activate a chain of reactions, causing catastrophic thermal runaway.

With continuous improvement of LIBs in energy density, enhancing their safety is becoming increasingly urgent for the development of electrical devices e.g. electrical vehicles. The mechanisms underlying safety issues vary for each different battery chemistry. The present technology focuses on tailoring insulation barrier and corresponding configurations of those tailored barriers to obtain favorable thermal and mechanical properties. The insulation barriers of the present technology provide effective heat dissipation strategies under normal as well as thermal runaway conditions, while ensuring stability of the LIB under normal operating modes (e.g., withstanding applied compressive stresses).

The insulation barriers disclosed herein are useful for separating, insulating and protecting battery cells or battery components of batteries of any configuration, e.g., pouch cells, cylindrical cells, prismatic cells, as well as packs and modules incorporating or including any such cells. The insulation barriers disclosed herein are useful in rechargeable batteries e.g. lithium-ion batteries, solid state batteries, and any other energy storage device or technology in which separation, insulation, and protection are necessary.

Passive devices such as cooling systems may be used in conjunction with the insulation barriers of the present disclosure within the battery module or battery pack.

The insulation barrier according to various embodiments of the present disclosure in a battery pack including a plurality of single battery cells or of modules of battery cells for separating said single battery cells or modules of battery cells thermally from one another. A battery module is composed of multiple battery cells disposed in a single enclosure. A battery pack is composed of multiple battery modules.

Battery modules and battery packs can be used to supply electrical energy to a device or vehicles. Device that use battery modules or battery packs include, but are not limited to, a laptop computer, PDA, mobile phone, tag scanner, audio device, video device, display panel, video camera, digital camera, desktop computers military portable computers military phones laser range finders digital communication device, intelligence gathering sensor, electronically integrated apparel, night vision equipment, power tool, calculator, radio, remote controlled appliance, GPS device, handheld and portable television, car starters, flashlights, acoustic devices, portable heating device, portable vacuum cleaner or a portable medical tool. When used in a vehicle, a battery pack can be used for an all-electric vehicle, or in a hybrid vehicle.

Aspects of the present disclosure will be described with reference to the following numbered clauses:
1. An insulation barrier for use in an electrical energy storage system, the insulation barrier comprising:
   at least one insulation layer;
   a support member surrounding at least a portion of the insulation layer, and
   an encapsulation layer at least partially surrounding the insulation layer, wherein the encapsulation layer comprises a laminate film comprising an outer polymer layer, a rigid layer, and an inner polymer layer, wherein the inner polymer layer is in contact with the insulation layer and wherein the rigid layer is disposed between the outer polymer layer and the inner polymer layer.
2. The insulation barrier of clause 1, wherein the support member is composed of a material that is different from a material used for the insulation layer.
3. The insulation barrier of clause 1 or 2, wherein the insulation barrier comprises two support members positioned on opposing sides of the insulation layer.
4. The insulation barrier of clause 1 or 2, wherein the insulation barrier comprises a U-shaped support member.
5. The insulation barrier of clause 1 or 2, wherein the insulation barrier comprises a support member that surrounds the perimeter of the insulation barrier.
6. The insulation barrier of any one of clauses 1-5, wherein the support member is composed of a polymeric material.
7. The insulation barrier of any one of clauses 1-6, wherein the support member comprises an intumescent material.
8. The insulation barrier of any one of clauses 1-7, wherein the insulation layer has a thermal conductivity through a thickness dimension of said insulation layer of less than about 50 mW/m-K at 25 °C and less than about 60 mW/m-K at 600 °C.
9. The insulation barrier of any one of clauses 1-8, wherein the insulation layer comprises an aerogel.
10. The insulation barrier of any one of clauses 1-9, wherein the outer polymer layer is made from a polymer selected from the group consisting of polyoxymethylene, acrylonitrile butadiene styrene, polyamide-imide, polyamide, polycarbonate, polyester, polyetherimide, polystyrene, polysulfone, polyimide, and terephthalate.
11. The insulation barrier of any one of clauses 1-10, wherein the inner polymer layer is composed of a polyolefin polymer.
12. The insulation barrier of any one of clauses 1-11, wherein the inner polymer layer is composed of a polymer that is different from the polymer in the outer polymer layer.
13. The insulation barrier of any one of clauses 1-12, wherein the outer polymer layer is composed of polyethylene terephthalate ("PET") or a nylon polymer, and wherein the inner polymer layer is composed of polypropylene ("PP") or polyethylene ("PE").
14. The insulation barrier of any one of clauses 1-13, wherein the rigid layer comprises a metal.
15. The insulation barrier of clause 14, wherein the metal is selected from the group consisting of aluminum, copper, steel, and titanium.
16. The insulation barrier of any one of clauses 1-13, wherein the rigid layer comprises a polymer.
17. The insulation barrier of clause 16, wherein the polymer is selected from the group consisting of polybenzimidazole fiber (PBI fiber), nylon, melamine, modacrylic, and aromatic polyamide (aramid).
18. The insulation barrier of any one of clause 1-13, wherein the rigid layer comprises a material selected from the group consisting of carbon fibers, graphite, silicon carbide, and mica.
19. The insulation barrier of any one of clauses l-18, wherein the encapsulation layer further comprises an adhesive disposed between the outer polymer layer and the rigid layer and/or the inner polymer layer and the rigid layer.
20. The insulation barrier of any one of clauses 1-19, wherein the outer polymer layer has a thickness of about 10 µm to about 50 µm.
21. The insulation barrier of any one of clauses 1-20, wherein the rigid layer has a thickness of about 50 µm to about 150 µm.
22. The insulation barrier of any one of clauses 1-21, wherein the inner polymer layer has a thickness of about 10 µm to about 50 µm.
23. The insulation barrier of any one of clauses 1-22, wherein the encapsulation layer has a total thickness of between about 70 µm to about 200 µm.
24. The insulation barrier of any one of clauses 1-23, wherein the encapsulation layer is attached to the support member.
25. The insulation barrier of any one of clauses 1-24, further comprising one or more adhesive pads coupling the encapsulation layer to the support member.
26. An insulation barrier for use in an electrical energy storage system, the insulation barrier comprising:
   at least one insulation layer;
   a support member surrounding at least a portion of the insulation layer, and
   a rigid layer at least partially surrounding the insulation layer.
27. A battery module comprising:
   a plurality of battery cells, and
   one or more insulation barriers according to any one of clauses 1-26, wherein at least one insulation barrier is disposed between adjacent battery cells.
28. The battery module of clause 27, wherein the battery cells are disposed in an enclosure.
29. The battery module of clause 27 or 28, wherein the insulation barrier has a surface area greater than the surface area of the battery cell, and wherein a portion of the insulation barrier contacts the interior surface of the enclosure.
30. An electrical power system comprising one or more battery modules as described in any one of clauses 27-29.
31. A device or vehicle comprising a battery module according to any one of clauses 27-29.
32. The device of clause 31, wherein said device is a laptop computer, PDA, mobile phone, tag scanner, audio device, video device, display panel, video camera, digital camera, desktop computers military portable computers military phones laser range finders digital communication device, intelligence gathering sensor, electronically integrated apparel, night vision equipment, power tool, calculator, radio, remote controlled appliance, GPS device, handheld and portable television, car starters, flashlights, acoustic devices, portable heating device, portable vacuum cleaner or a portable medical tool.
33. The vehicle of clause 31, wherein the vehicle is an electric vehicle.

## Claims

1. An insulation barrier for use in an electrical energy storage system, the insulation barrier comprising:
at least one insulation layer;
a support member surrounding at least a portion of the insulation layer,
an encapsulation layer at least partially surrounding the insulation layer, wherein the encapsulation layer comprises a laminate film comprising an outer polymer layer, a rigid layer, and an inner polymer layer, wherein the inner polymer layer is in contact with the insulation layer and wherein the rigid layer is disposed between the outer polymer layer and the inner polymer layer; and
wherein the encapsulation layer further comprises an extension portion extending beyond the support member in contact with an interior surface of a battery cell enclosure to form a seal with an interior surface of the battery cell enclosure.

2. The insulation barrier of claim 1, wherein the support member is composed of a material that is different from a material used for the insulation layer.

3. The insulation barrier of claim 1 or 2, wherein the insulation barrier comprises two support members positioned on opposing sides of the insulation layer.

4. The insulation barrier of any one of claims 1-3, wherein the support member is composed of a polymeric material.

5. The insulation barrier of any one of claims 1-4, wherein the insulation layer has a thermal conductivity through a thickness dimension of said insulation layer of less than about 50 mW/m-K at 25 °C and less than about 60 mW/m-K at 600 °C.

6. The insulation barrier of any one of claims 1-5, wherein the insulation layer comprises an aerogel.

7. The insulation barrier of any one of claims 1-6, wherein the encapsulation layer further comprises an adhesive disposed between the outer polymer layer and the rigid layer and/or the inner polymer layer and the rigid layer.

8. The insulation barrier of any one of claims 1-7, wherein the outer polymer layer has a thickness of about 10 µm to about 50 µm.

9. The insulation barrier of any one of claims 1-8, wherein the inner polymer layer has a thickness of about 10 µm to about 50 µm.

10. The insulation barrier of any one of claims 1-9, wherein the encapsulation layer has a total thickness of between about 70 µm to about 200 µm.

11. The insulation barrier of any one of claims 1-10, wherein the encapsulation layer is attached to the support member.

12. The insulation barrier of any one of claims 1-11, further comprising one or more adhesive pads coupling the encapsulation layer to the support member.
